(19) **Europäisches Patentamt**
**European Patent Office**
**Office européen des brevets**

(11) **EP 4 697 163 A1**

(12) # EUROPEAN PATENT APPLICATION

(43) Date of publication:
**18.02.2026 Bulletin 2026/08**

(21) Application number: **25192996.4**

(22) Date of filing: **31.07.2025**

(51) International Patent Classification (IPC):
**G06F 9/30** *(2018.01)* **G06F 7/38** *(2006.01)*
**G06F 7/74** *(2006.01)*

(52) Cooperative Patent Classification (CPC):
**G06F 9/30014; G06F 7/38; G06F 7/74;**
**G06F 9/30018; G06F 9/30025; G06F 9/30043**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.08.2024 GB 202411707**

(71) Applicant: **Imagination Technologies Limited
Kings Langley
Hertfordshire WD4 8LZ (GB)**

(72) Inventors:
• **ROVERS, Kenneth
  Kings Langley, WD4 8LZ (GB)**
• **KENNEDY, Michael
  Kings Langley, WD4 8LZ (GB)**

(74) Representative: **Page White Farrer
Bedford House
21a John Street
London WC1N 2BF (GB)**

(54) **SIGN INJECTION IN A FLOATING POINT NUMBER FORMAT**

(57) The disclosure relates to a processor which can re-encode from an unnormalized wider floating point format to a normalized wider floating point format, and re-encode from an unnormalized narrower floating point format to a normalized narrower floating point format. According to the disclosure, when performing a wider-format sign injection operation on a NaN-boxed value of the normalized narrower floating point format held in a source register of a set of normalized-format registers, a bit manipulation is performed on a bit in the respective source register at a most-significant bit-position of the normalized wider floating point format. And when de-normalizing the NaN-boxed value of the normalized narrower floating point format from the respective source register, the bit at the most-significant bit-position of the normalized wider floating point format is ignored in detecting NaN-boxing.

FIGURE 1

EP 4 697 163 A1

Description

CROSS-REFERENCE TO RELATED APPLICATION

This application claims priority from UK patent application GB2411707.9 filed on 8 August 2024, which is herein incorporated by reference in its entirety.

TECHNICAL FIELD

The present disclosure relates to the encoding of exceptional values (such as infinities and NaNs) in a normalized floating point number format used in a floating point unit (FPU) or other floating point logic circuitry for performing floating point operations.

BACKGROUND

A given processor will comprise execution logic which is configured to recognize a certain predefined instruction set. The instruction set is the fundamental set of definitions of the types of machine code instruction which the processor is configured to recognize and execute. Each type of instruction in the instruction set is defined by its opcode, which specifies the type of operation to be performed. Each type of instruction may further comprise zero or more operand fields depending on the instruction type. For instance some types of instruction may take a single source operand. An example would be a sign injection which flips the sign of the operand value. Other types may take multiple operands. Examples of these include add, multiply or divide, each of which takes two source operands and a destination operand specifying a location at which to place the result. Source operands may be expressed in terms of a location from which to take the source value.

A value waiting to be operated on will be held in a storage element of certain fixed width, typically a register. For example typically, in a reduced instruction set computer (RISC), values are loaded from memory into registers by executing load instructions, then a further instructions may operate on the values from the registers and the results are written back to registers. For instance a first load instruction may be executed to load a first source value from memory into a first register, and a second load instruction may be executed to load a second source value from memory to a second register. Each load instruction takes a source operand specifying a memory address from which to load a value and a destination operand specifying a destination register address in which to place the loaded value. Subsequently, an instruction for combining two values, such as to add, multiply or divide them, may then be executed, specifying register addresses of the first and second registers as its source operands and a destination register address as its destination operand. The result may then be saved back to memory by executing a store instruction, which takes a source operand specifying the register address from which to take the value and a destination operand specifying the memory address to store the value to. Values may also be moved between registers by executing a move instruction.

One category of operation is floating point operations which operate on floating point values expressed in a floating point number format. In order to operate on the value, the value needs to be stored in the storage element (e.g. source register) in accordance with an appropriate floating point number format, and the floating point logic (e.g. FPU) needs to be configured to recognize the floating point format - in other words to know which fields of the register correspond to which features of the floating point number: its significand, its exponent, and in most formats its sign.

A floating point number format comprises an m-bit wide mantissa field ("mant") for specifying a significand, an e-bit wide exponent field ("exp") for specifying an exponent, and usually a sign field which is a single sign bit. The significand determines the precision of the floating point number format and the exponent its range. The number of bits, m and e, of the mantissa and exponent fields respectively are each a non-zero number of bits and typically each greater than one or two bits (otherwise if one of the mantissa field or exponent field is zero bits, the format reverts to either a logarithmic number or a fractional number respectively). Typically, at least for normal values, when the format is interpreted the significand is taken to have an implicit leading 1 relative to the mantissa field, and the exponent may be taken to have an implicit bias (implicit for the present purposes means not expressed explicitly in the mantissa and exponent fields respectively). The value represented according to the floating point number format is then:

$$\text{value (normal)} = (-1)^{\text{sign}} * 2^{(\text{exp-bias})} * 1.\text{mant}$$

Or if an unsigned format was used - rare for floating point - the corresponding formula would be just $2^{(\text{exp-bias})} * 1.\text{mant}$.

Note therefore that where it is said that the mantissa field mant specifies the significand and the exponent field exp specifies the exponent, this does not necessarily mean the significand is equal to the raw binary value in the mantissa field mant nor that the exponent is equal to the raw binary value in the exponent field exp: rather, there could also be implicit elements, such as a leading component to the significand or a bias in the exponent. The implicit leading 1 of the significand is typically an implicit property of the number format. The implicit bias may be fixed or in some cases could be programmable via a separate control register. The bias could be zero or non-zero.

On a point of terminology, note that the term "mantissa" is often used to refer to the actual bits in the mantissa field of the number format used in the registers, whilst the significand refers to the coefficient in the scientific notation. I.e. in the case of an implicit leading 1, significand = 1.mantissa. However examples also exist in the literature of the terms being used interchangeably. For the present purposes, "significand" will be used to refer to the coefficient in the scientific notation, and "mantissa field" (mant) will be used to refer to the actual bit field of the number format as used in registers. The mantissa field may be said to specify the significand in the sense that the one determines the other, but not necessarily that they are equal in all formats. On a similar point, note that the exponent in the scientific notation is not necessarily equal to the value in the exponent field of the number format, because of the possible bias, depending on the format. Herein the term "exponent" will be used to refer to the exponent in the scientific notation, and "exponent field" (exp) will be used to refer to the bit field in the number format. I.e. if there is a bias as in the above example, then exponent = exp-bias.

As an example of a specific format, in the IEEE FP16 (half precision) format, m = 10 bits, e = 5 bits, there is a single sign bit, bias = 15, and for normal values the significand has an implicit leading 1 relative to the mantissa field (as shown in the above formula). In the IEEE FP32 (single precision) format, m = 23 bits, e= 8 bits, there is a single sign bit, bias = 127, and for normal values the significand has an implicit leading 1 relative to the mantissa field. In the IEEE FP64 (double precision) format, m = 53 bits, e = 11 bits, there is a single sign bit, bias = 1023, and for normal values the significand has an implicit leading 1.

The floating point format may also support certain combinations of bits that act like escape sequences, i.e. which change the interpretation of the fields of the floating point format compared to the normal interpretation. For instance, in some number formats including those of the IEEE FPn (IEEE 754) standards (FP16, FP32, etc.), when the exponent field is all 0s this changes the interpretation such that the significand is no longer taken to have an implicit leading 1. Such values are known as "subnormal" values (or sometimes "denormal" values), as opposed to "normal" values which have a non-zero exponent field and an implicit leading 1. That is:

$$\text{value (normal)} = (-1)^{sign} * 2^{(exp-bias)} * 1.mant, \qquad \text{if } exp \neq 0$$

$$\text{value (subnormal)} = (-1)^{sign} * 2^{(1-bias)} * 0.mant, \qquad \text{if } exp=0$$

Again a sign bit is technically optional depending on implementation, but is included in most floating point number formats. The bias could be zero or non-zero, and could be fixed or programmable, depending on the number format.

Note: returning to the point of terminology mentioned earlier, for normal values the significand of the scientific notation = 1.mant, and for subnormal values the significand = 0.mant (where mant is the value in the mantissa bit field of the number format as it appears in registers). For both formats the exponent of the scientific notation = exp-bias if a bias is used, or otherwise with no bias the exponent simply equals exp (where exp is the value in the exponent field of the number format as it appears in registers).

One or more further bit-value combinations may also be used to encode exceptional values. These are values that do not represent numbers from the set of Real numbers, either because the result would be a non-real number or because the result is not a numerical value at all. Exceptional values can be either infinity, or NaN ("not a number"). NaNs are treated as distinct from infinities in IEEE 754 standards. A NaN may result for example from an operation attempting to take the square root of a negative number. Formats with a sign bit may support the representation of +-/ infinity and +/-NaN.

For instance, in number formats including at least those of the IEEE 754 standards, when the exponent field exp is all 1s, this indicates that the value is to be treated as an exceptional value. Further, if the exponent field is all 1s and the mantissa field is all 0s, this represents an infinity (which may be +/- infinity depending on the sign bit); and if the exponent field is all 1s while the mantissa field is non-zero, this represents a NaN (which may be +/- NaN depending on the sign bit). In the latter case, optionally a type of the NaN may be encoded into the non-zero mantissa field. E.g. this may be used to distinguish between canonical and non-canonical NaNs, or to encode the cause of the NaN.

## SUMMARY

If an operation is to combine a normal value with a subnormal value, e.g. to multiply one by the other or add them together, then both numbers may need to be normalized to a normalized format which represents the normal and subnormal values in a common form (unlike the unnormalized input format which represents them differently). To achieve this the unnormalized format comprises at least one extra bit in its exponent field compared to the unnormalized format, so that both values can be represented on a common exponential scale. The operation may then be performed on the normalized values, and the result of the operation may be generated in the normalized format. The result is subsequently de-normalized back to the unnormalized format such that the software sees the standard, unnormalized form. Conventionally the normalized format is only used internally within the FPU (or other component implementing the floating point operation) and never seen in registers. However in accordance with the present disclosure, it is also possible that normalized-format values can be held in registers and only converted back to the normalized format when read out by software, such as when storing a value to a memory or other such memory-mapped address, or when moving the value from a normalized-format register to a standard-format register. This avoids having to convert intermediate results back and forth between normalized and de-normalized formats, such as when there is a chain of operations where only the end result is to be read out by software.

It is also possible that different precision values may be stored in the same register on different occasions (a given register may be capable of accepting a value selected from among two or more different possible precisions). When a narrower (lower precision) value is stored in a wider register, then the value is typically right aligned (placed in the least significant bit positions in the register) and the unused MSBs of the register are all set to 1. E.g. if a 16-bit half precision value is placed in a 32-bit wide register, the value is placed in the lower 16 bits and the upper 16 bits are all set to 1. This is known as "NaN boxing" in the art, because it has the effect that if any wider-format operation (expecting a wider format value) attempts to operate on the content of a register that actually comprises a NaN-boxed narrower-format value, then the operation will see the value as a NaN (due to all exponent bits being 1 if interpreted according to the wider format); and since the results of operating on a NaN is always another NaN, the operation will output a NaN. This is the desired result since trying to perform an operation designed for the wrong width of value should indeed be a NaN. In embodiments disclosed herein, the fact of being a NaN-boxed NaN may also be encoded in a more efficient way into a subset of the otherwise-unused MSBs (by encoding into part of the exponent field of the wider format, as will be discussed in more detail later). Therefore more generally, NaN-boxing may be defined herein as any scheme placing a narrower-format value in a wider-format register by right-aligning the narrower-format value in the register and padding some or all of the remaining, more significant bits in any way that will cause the floating point logic to recognize the content of the register as a NaN in the wider format.

NaN boxing and normalization can be combined. E.g. if a register for holding values in the normalized format is 33 bits wide, it may be used to hold a 33-bit normalized single precision (SP) value or a 17-bit normalized half precision (HP) value (remember the exponent of the normalized format has an extra exponent bit than the corresponding unnormalized format). In the latter case the 17-bit normalized single precision value is placed in the right-most (least significant) 17 bits and the 16 left-most (most significant) bits are all set to 1 (or encoded in some other way representing a NaN in the wider format).

However, problems may occur when a sign injection operation is performed on a Nan-boxed normalized value held in a normalized-format register.

Particularly, sign-injection operations (like other floating point operations) come in different types designed for source values of a specific width. E.g. the instruction set may comprise a half-precision sign-injection instruction for flipping the sign bit of a standard FP16 value, and a single-precision sign-injection instruction for flipping the sign bit of a standard FP32, etc. However, though it may not have been intended, it is possible to execute a sign-injection operation of the wrong type on a value in a register, such as to perform a wider format sign injection operation on source register containing a NaN-boxed narrower-format value. Even though the wider-format operation may not have been designed for this purpose, nonetheless if someone does apply it in this way for any reason, then it should still give a well-defined, predictable result. That result, for an n-bit operation, is to flip the nth bit from the right in the *unnormalized* domain. I.e. a half precision sign injection operation should flip the 16th bit from the right, and a single precision sign injection operation should flip the 32nd bit from the right, and a double precision sign injection operation should flip the 64th but from the right, and so forth (assuming the sign bit is the most significant bit). For the present purposes this may be called the canonical result, target result or desired result.

So for example the instruction set of a processor may include a single-precision sign-injection instruction type designed to operate on FP32 values (or 33-bit values in the normalized domain), and a separate half-precision sign-injection instruction type designed to operate on FP16 values (or 17-bit values in the normalized domain). The sign bit is typically the most-significant bit of any signed format, so a single-precision sign injection operation will flip the 32nd bit from the right (32nd least significant bit) if executed in the unnormalized domain, or the 33rd bit from the right (33rd least significant bit) if executed in the normalized domain. Similarly, a half-precision sign injection operation will flip the 16th bit from the right (16th least significant bit) if executed in the unnormalized domain, or the 17th bit from the right (17th least significant bit) if executed in the normalized domain. However if a single-precision sign injection operation is performed on the content of a normalized-format register currently holding a NaN-boxed half-precision value, for example, then the sign-injection operation will still flip the bit at the most significant bit-position of the wider format, which is a bit of the NaN-boxing.

When the value comes to be de-normalized (e.g. when storing to memory), the flipped MSB will mean that conventional denormalization logic would now fail to recognize that the value is a NaN-boxed narrower-format value and would instead simply interpret it is a NaN in the wider format. The denormalized result would then not be the canonical, target result.

It is recognized herein that this issue can be addressed by configuring the de-normalization logic to ignore the most-significant bit of the wider format for the purpose of detecting Nan-boxing when de-normalizing.

According to a first aspect aspect disclosed herein, there is provided a processor comprising: normalization circuitry configured to re-encode each of a plurality of values from an unnormalized wider floating point format to a normalized wider floating point format, and to re-encode each of a plurality of values from an unnormalized narrower floating point format to a normalized narrower floating point format. The processor also comprises: normalized-format registers each at least as wide as the normalized wider floating point format, each thus able to hold a value in the normalized wider floating point format and, at another time, a NaN-boxed value in the normalized narrower floating point format; and floating point logic circuitry operable to perform floating point operations on values held in specified ones of the normalized-format floating point registers. The floating point operations include a wider-format sign injection operation and a narrower-format sign injection operation, the floating point logic circuitry being configured so as, at least when performing the wider-format sign injection operation on a NaN-boxed value of the normalized narrower floating point format held in a respective source register of the normalized-format registers, to perform a bit manipulation on a bit (i.e. flip or set the bit) in the respective source register at a most-significant bit-position of the normalized wider floating point format (despite being a NaN-boxing bit, or despite the fact that the manipulation at this bit position may affect the NaN-boxing encoding). The processor further comprises denormalization circuitry arranged to de-normalize values from the normalized-format registers, wherein the denormalization circuitry is configured so as, at least when de-normalizing the NaN-boxed value of the normalized narrower floating point format from the respective source register, to ignore the bit at the most-significant bit-position of the normalized wider floating point format when detecting NaN-boxing, and thus denormalize the NaN-boxed value into the unnormalized narrower floating point format.

The unnormalized wider floating point format supports normal and subnormal values and the normalized wider floating point format represents the normal and subnormal values from the unnormalized wider floating point format on a common exponential scale. The unnormalized narrower floating point format also supports normal and subnormal values and the normalized narrower floating point format represents the normal and subnormal values from the unnormalized narrower floating point format on common exponential scale (which may be a different exponential scale than used by the normalised wider format, typically a smaller scale, i.e. smaller exponent field). The unnormalized wider format is wider (in bit width) than the unnormalized narrower format. The normalized wider format is wider (in bit width) than the normalized narrower format. The unnormalized wider format may be of a higher precision (larger mantissa field) than the unnormalized narrower format, and the normalized wider format may be of a higher precision (larger mantissa field) than the normalized narrower format. The unnormalized wider format may have a larger exponent field than the unnormalized narrower format, and the normalized wider format may have a larger exponent field than the normalized narrower format. The normalized wider format has at least one extra exponent bit in its exponent field than the unnormalized wider format, and the normalized narrower format has at least one extra exponent bit in its exponent field than the unnormalized narrower format. The normalized wider format may be wider than both the normalized and unnormalized narrower format. The normalized wider format may have a larger mantissa field and a larger exponent field than each of the normalized and unnormalized narrower format.

When any value is placed in one of the normalized-format registers in the normalized narrower floating point format the value, it is right aligned and the remaining more-significant bits of the register are NaN-boxed (all set to 1, or some other encoding used such as by encoding "NaN-boxed" into the exponent field of the wider format).

The wider-format sign injection operation is for flipping a sign bit of the normalized wider floating point format, and the narrower sign injection operation is for flipping a sign bit of the normalized narrower floating point format.

In embodiments the floating point logic circuitry is a FPU, i.e. a unit of the processor for executing floating point instructions, and will be exemplified as such in the following Detailed Description. However more generally, any of the teachings herein may apply to any hardware that operates on floating point numbers.

The first aspect summarized above addresses the issue that occurs when performing a wider sign injection on a NaN-boxed narrower value. A separate issue occurs when performing a narrower-format sign injection operation on a wider-format value, which would change a bit in the mantissa field of the wider format (or technically it could also be a exponent bit, but not for the standard FP64, FP32, FP16 formats).

Therefore according to a second aspect disclosed herein, there is provided a processor comprising: logic circuitry operable to re-encode values from an unnormalized wider floating point format to a normalized wider floating point format, and re-encode values from an unnormalized narrower floating point format to a normalized narrower floating point format, and to decode values in the normalized wider floating point format back to the unnormalized floating point format, and decode values in the normalized narrower floating point format back to the unnormalized narrower floating point format; and normalized-format registers each at least as wide as the normalized wider floating point format, each thus able to hold a value in the normalized wider floating point format and, at another time, a NaN-boxed value in the normalized narrower floating point format; wherein the logic circuitry is operable to perform floating point operations on values held in specified source registers among the normalized-format floating point registers; wherein the floating point operations include a wider-format sign injection operation for performing a bit manipulation function on a sign bit of a value in the normalized wider floating point format, and a narrower-format sign injection operation for performing the bit manipulation function on a sign bit of a value in the normalized narrower floating point format; and wherein the logic circuitry is configured so as when performing the narrower-format sign injection operation on a respective source that is a value in the normalized wider floating point format, to: denormalize the respective source value to a denormalized value in the unnormalized wider floating point format, then perform the bit manipulation function on a bit of the denormalized value in the normalized wider floating point format at a bit position of a sign bit of the unnormalized narrower floating format, then renormalize the denormalized value back to the normalized wider floating point format.

The first aspect may be used together in the same processor as the second aspect, or either of them may be used without the other.

The processor may be embodied in hardware on an integrated circuit. There may be provided a method of manufacturing, at an integrated circuit manufacturing system, a processor according to any embodiment disclosed herein. There may be provided an integrated circuit definition dataset that, when processed in an integrated circuit manufacturing system, configures the system to manufacture a processor according to any embodiment disclosed herein. There may be provided a non-transitory computer readable storage medium having stored thereon a computer readable description of a processor that, when processed in an integrated circuit manufacturing system, causes the integrated circuit manufacturing system to manufacture an integrated circuit embodying a processor according to any embodiment disclosed herein.

There may be provided an integrated circuit manufacturing system comprising: a non-transitory computer readable storage medium having stored thereon a computer readable description of the processor; a layout processing system configured to process the computer readable description so as to generate a circuit layout description of an integrated circuit embodying the processor; and an integrated circuit generation system configured to manufacture the processor according to the circuit layout description. The layout processing system may be configured to determine positional information for logical components of a circuit derived from the integrated circuit description so as to generate the circuit layout description of the integrated circuit embodying the graphics processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

This Summary is provided merely to illustrate some of the concepts disclosed herein and possible implementations thereof. Not everything recited in the Summary section is necessarily intended to be limiting on the scope of the disclosure. Rather, the scope of the present disclosure is limited only by the claims.

## BRIEF DESCRIPTION OF THE DRAWINGS

Examples will now be described in detail with reference to the accompanying drawings in which:

Figure 1 is a schematic block diagram of an example processor according to embodiments of the present disclosure,

Figure 2 is a schematic representation of a first floating point number format,

Figure 3 is a schematic representation of a normalized floating point number format according to embodiments disclosed herein,

Figure 3A is a schematic representation of an encoding of an exceptional value in a normalized floating point number format according to embodiments disclosed herein,

Figure 4 shows a computer system in which a graphics processing system is implemented, and

Figure 5 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

## DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

## A. Example Processor Overview

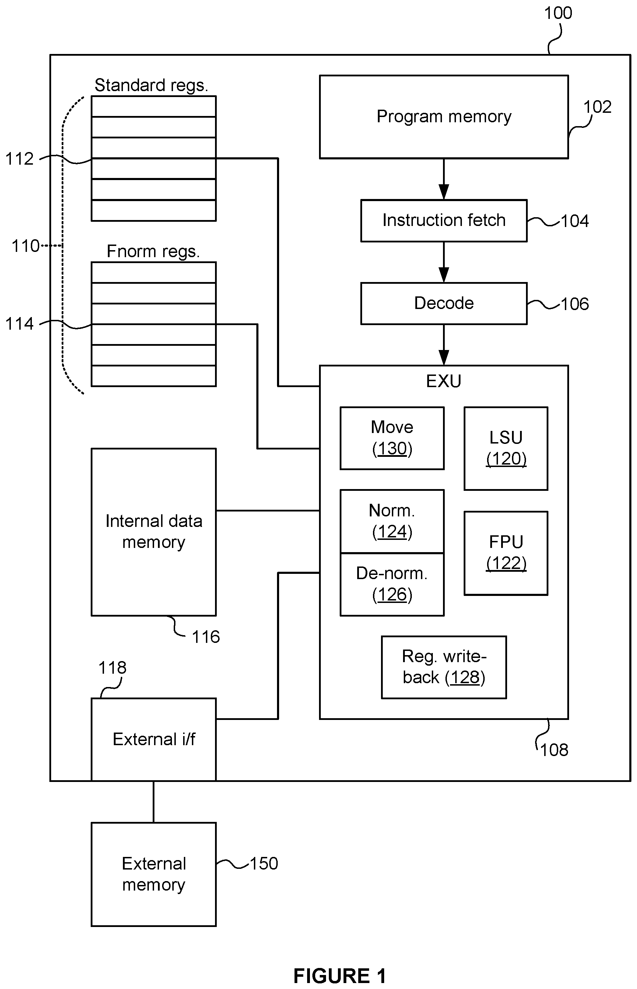

Figure 1 shows an example processor 100 in which the disclosed techniques may be implemented in accordance with embodiments of the present disclosure. The processor 100 comprises: a program memory 102, an instruction fetch stage 104, a decode stage 106, an execution unit (EXU) 108, a plurality of registers 110, a data memory 116, and an external interface (i/f) 118 for connecting to an external device 150 such as an external memory. Each of the instruction fetch stage 104, decode stage 106 and execution unit 108 is implemented in dedicated circuitry, i.e. hardware logic. Each of the program memory 102 and the data memory 116 may comprise one or more memory units employing one or more memory media, e.g. RAM, ROM or EEPROM. Further, though shown separately for schematic purposes, the program memory 102 is not necessarily implemented in a separate memory unit than the data memory 116, though it could be. The program memory 102 could be implemented in a different region of one or more of the same memory units as the data memory 116, and/or one or more different memory units.

The execution unit 108 comprises a load/store unit (LSU) 120, a floating point unit (FPU) 122, normalization logic 124, denormalization logic 126, a register write-back stage 128, and move logic 130. Each of these components is implemented in dedicated circuitry, i.e. hardware logic. The FPU 122 may comprise various constituent floating point components such as an add module, a multiplication module, a division module, a sign injection module, etc. It will be appreciated that the instruction fetch stage 104, decode stage 104 and execution unit 108 may be arranged in a pipeline, configured to execute instructions in a pipelined manner. Constituent stages of the execution unit 108 such as the LSU 120, FPU 122 and register write-back stage 128 may also be pipelined. Pipelining per se is well known in the art and need not be discussed in further detail here.

The registers 110 may be arranged in one or more register banks. They may comprise a plurality of standard-format registers 112, and/or a plurality of normalized-format registers 114. The standard-format registers 112 may be implemented in one or more register banks. The normalized-format registers 114 may be implemented in one or more register banks. The normalized-format registers 114 may be implemented in one or more of the same register banks as the standard-format registers 112 or one or more different register banks. The standard-format registers 112 may include general purpose registers and/or dedicated floating point registers. The normalized format registers 114 are preferably dedicated floating point registers but the possibility that they could also be used for other purposes is not excluded.

Each of the standard-format registers 112 (if included) is suitable for holding a value in a standardized, unnormalized format, e.g. any one or more of the IEEE 754 formats such as FP16, FP32, FP64, etc. Unnormalized for the present purposes means a format in which normal and subnormal values are represented differently, having differing interpretations for normal and subnormal (denormal) values (i.e. differing schema for how normal and subnormal values are represented within the format); whereas a normalized format is one which represents normal and subnormal values converted from an unnormalized format using the same interpretation (same schema), on a common exponential scale. The process of normalization will be discussed again in more detail later.

The width of each standard-format register 112 may be sized accordingly for the format or formats it is designed to accept. Note that in embodiments each standard-format register may be sized to accommodate multiple different possible standard formats of different widths - e.g. each could be 64 bits wide to accommodate any of FP16, FP32 and FP64 (using NaN-boxing for the formats less than 64-bits wide, as will be discussed in more detail later). Also it is not essential to the concepts disclosed herein that the unnormalized format is standardized and more generally any unnormalized format could be used, whether standardized or not. The unnormalized format or formats will be described as a standard format or standard formats in the following but it will be appreciated that this is not necessarily limiting and any reference herein to a standard format or the like could be replaced more generally with reference to an unnormalized format.

Each of the normalized-format registers 114 (if included) is for holding a value in a normalized format which may not be standardized (though the possibility that the normalized format could be standardized is not excluded).

The width of each normalized-format register 114 may be sized accordingly for the format or formats it is designed to hold. Each normalized-format register may be at least one bit wider than a corresponding standard-format register 112 in order to accommodate an exponent field of at least one extra bit, as will be discussed in more detail later. Note that in embodiments each normalized format register 114 may be sized to be able to accommodate multiple different possible normalized formats of different widths - e.g. each normalized-format register 114 may be 65 bits wide in order to accommodate any of a 65-bit normalized format converted from FP64, a 33-bit normalized format converted from FP32, and a 17-bit normalized format converted from FP16. Such normalized formats may be referred to herein as "Fnorm" formats, but it will be appreciated that this is not limiting and in general any normalized format or formats may be used, and any reference herein to Fnorm may be replaced more generally with reference to a normalized format.

As an alternative implementation (not shown), each of a set of some or all of the registers 110 may be a general-purpose register capable of holding either a standard-format value or a normalized-format value at different times. In this case the format will need to be recognizable from the bits of the value, or else some other indicator will need to be provided such as an additional one-bit flag associated with each general-purpose register to specify whether it is currently being used to hold a standard-format value or a normalized-format value. In another alternative, the registers 110 of the processor 100 may comprise only standard-format registers 112, in which case the FPU 122 will be configured to convert to the normalized format where necessary internally within the FPU. As another possibility, the registers 110 of the processor 100 (or at least those used for floating point operations) may instead comprise only normalized-format registers 114, in which case the standard format values (as they are found in memory 116/150) will always need to be automatically converted to the normalized format upon load, and automatically converted back to the standard format upon store back to memory 116/150.

In operation, the instruction fetch stage 104 fetches a series of machine code instructions from the program memory 102. The term instruction as used herein refers to machine code instructions, though this may not be stated explicitly each time. The instructions may originate from the program memory (e.g. in the case of a ROM), or may have been previously loaded into the program memory 102 from an external source or sources. The program memory 102 is shown here as an internal memory of the processor 100, but in principle the possibility of fetching instructions directly from an external memory is not excluded either.

Each instruction fetched by the instruction fetch stage 104 is passed to the decode stage 106 to be decoded, and then on to the execution unit 108 to be executed. E.g. this may be done in a pipelined manner as mentioned previously. The execution unit 108 operates on each such received instruction in accordance with the opcode of the instruction.

If the instruction is a load instruction it is executed by the LSU 120. In this case the LSU 120 loads a value from a source address specified by a source operand of the load instruction into a destination register specified by a destination operand of the load instruction. The source address may be an address in the data memory 116 or another memory mapped device, such as the external interface 118 in order to load the value from an external peripheral 150 such as external memory. The value to be loaded is found in the source location in the standardized, unnormalized format, such as one of the IEEE 754 standards (e.g. FP 16, FP32, or FP64, etc.). It may be a normal or a subnormal (denormal) value. The destination is one of the plurality of registers 110 of the processor 100. This may be one or the standardized format registers 112 or one of the normalized-format registers 114.

If an instruction to be executed is a store instruction, that is also is executed by the LSU 120. In this case the LSU 120 saves a value from a source register specified by a source operand of the store instruction into a destination memory address in the data memory 116 or other memory-mapped device, such as the external interface 118 in order to store to an external peripheral 150 such as external memory. The source register is one of the plurality of registers 110 of the processor 100. The source register may be one of the standard-format registers 112 or one of the normalized-format registers 114.

If an instruction to be executed is a floating point instruction it is operated on by the FPU 122. The floating point instruction will take at least one source operand, and may also take a destination operand. Typically the source and destination operands are register addresses in the plurality of registers 110, specifying registers from which to take the source values to be operated upon and to place the result, respectively. For example a floating point arithmetic instruction such as add, multiply or divide, takes at least two source operands and one destination operand. The FPU 120 takes the source values from the registers specified by the source operands, generates a result, and causes the result to be written back to the destination register specified by the destination operand. The result may be written back to the destination register by controlling the register write-back stage 128 to do so. Other types of floating point instruction may take only a single source operand each. For example a sign injection instruction takes a single source operand specifying a single source register. When executed, the sign injection instruction flips the sign bit of the value in the source register.

If an instruction to be executed is a move instruction it is executed by the move logic 130. A move instruction is for moving a value from one register to another among the registers 110 of the processor 100. The move instruction takes a source operand specifying a source register, and a destination operand specifying a destination register. When executed it moves the value from the specified source register to the specified destination register. The source and destination could both be standard-format registers 112, or both normalized-format registers 114, or the source could be a normalized-format register 114 and the destination could be a standard format register 112 or vice versa.

The normalization logic 124 comprises circuitry configured to convert standard-format values (or more generally unnormalized values) to a normalized format. The denormalization logic 126 comprises circuitry configured to convert normalized values back to the standard format.

Values are typically stored in memory 116/150 (and other memory mapped devices) in the standard, unnormalized format (e.g. FP16, FP32 or FP64) - i.e. encoding normal and subnormal values differently. In a first approach to the design of the processor 100, the normalization logic 124 is configured to automatically convert any value to the normalized format when it is loaded from a memory address into any of the normalized format registers 114, such that it is loaded into the register in the normalized form. Further, the denormalization logic 126 may be configured to automatically convert any value back to the standard (or more generally unnormalized) form when it is stored from any normalized-format register 114 to a memory address, such that it is stored back to the memory 116 (or other memory mapped-device) in the standard form. In such embodiments the normalization and de-normalization logic 124, 126 could be considered part of the LSU 120. In this approach, floating point instructions executed by the FPU 122 operate on normalized values taken from the registers 114 in the normalized form and write results back the registers 114 in normalized form.

In a second, contrasting design approach, values to be operated on by floating point instructions may be loaded into the standard-format registers 112 in the standardized, unnormalized form; and results of floating point operations are written back to the registers 112 in the standardized, unnormalized form. In this case the normalization logic 124 is configured to automatically convert the source values to the normalized format internally with in the FPU 122 when operated on by the FPU, and the denormalization logic 126 is configured to automatically convert the result back to the standardized form before being written back to the destination register. In such embodiments the normalization and de-normalization logic 124, 126 may be considered part of the FPU 122.

The processor 100 could exclusively employ either the first approach or the second approach described above. Alternatively a hybrid design is possible, wherein the processor comprises both standard-format registers 112 and normalized format registers 114 which can both be used for floating point operations. In this case if a value is loaded into one of the normalized-format registers 114 it is dealt with in accordance with the first approach; but if it is loaded into one of the standard format registers and then operated on by a floating point instruction, then it is dealt with in accordance with the second approach. Similarly if a result of a floating point instruction is written back to one of the normalized-format registers 114 and then saved to a memory address, it is dealt with in accordance with the first approach; but if a result is written to one of the normalized format registers 114 then it is dealt with in accordance with the second approach.

In embodiments the denormalization logic 126 may be configured so as, if a move instruction is executed to move a value from a normalized-format register 114 to a standard-format register 112, to automatically convert the value from the normalized format to the standard format for placement in the destination register. And/or the normalization logic 124 may be configured so as, if a move instruction is executed to move a value from a standard-format register 112 to a normalized-format register 114, to automatically convert the value from the standard format to the normalized format for placement in the destination register. In such embodiments the move logic 130 may share the normalization and/or denormalization logic 124, 126 with the LSU 120 and/or FPU 122; or may comprise its own instance of the normalization and/or denormalization logic 124, 126.

### B. Floating Point Number Formats, Normalization and Exceptional Values

### B.1. Floating Point Number Formats

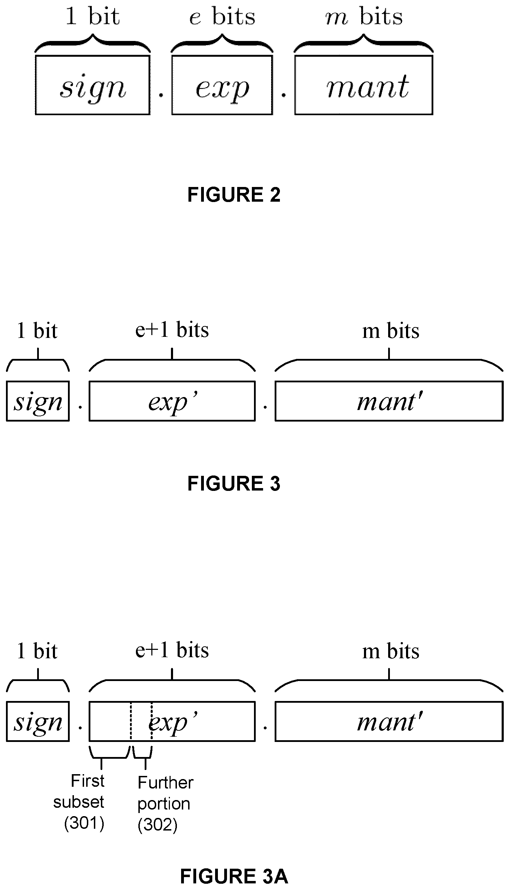

Figure 2 illustrates a conventional, unnormalized floating point number format such as used in IEEE 754 and other formats. Values in this format may be either normal or subnormal (also called denormal). For normal values, the value of the floating point number is determined by the formula:

$$\text{value} = (-1)^{\text{sign}} * 2^{(\text{exp-bias})} * 1.\text{mant}$$

where "sign" is the sign bit; "exp" is the exponent field; "mant" is the mantissa field; and "bias" is an exponent bias which could be zero or non-zero depending on implementation, and could be fixed or programmable via a control register. The symbol "^" represents "raised to the power of", and "." represents a radix point (for binary numbers also called a binary point, or "bicimal" point, i.e. like a decimal point but for binary).

However, certain combinations of bit values can act as escape sequences, altering the interpretation of the floating point format and giving it a special interpretation other than the normal interpretation shown above. Such special values may be represented as follows.

Table 1: normal and special values of a floating point number format.

| exp | mant | Interpretation |
|---|---|---|
| 0 < exp < all 1s | Any | Normal: $(-1)^{\text{sign}} * 2^{(\text{exp-bias})} * 1.\text{mant}$ |
| exp = 0 | 0 < mant ≤ all 1s | "Denormal" (i.e. "subnormal"): $(-1)^{\text{sign}} * 2^{(1-\text{bias})} * 0.\text{mant}$ |
| exp=0 | mant=0 | +/-0 (Could be described as a special case of a denormal) |
| exp = all 1s | 0 | $(-1)^{\text{sign}} * \text{infinity}$ |
| exp = all 1s | mant > 0 | NaN ("not a number") (e.g. result of square root of a negative number) |

In other words if the exponent field (exp) is between zero and the maximum possible value, then the format is interpreted as a regular floating point value. However if the exponent field is zero or maximum it is treated as a special value and given a different, special interpretation. Special values may include both subnormal values and exceptional values. Exceptional values may include infinities and NaNs.

The above formula for normal values allows normal floating point values having:

- largest magnitude (MAX_MAG): exp = 111...110, mant = 111...111; and
- minimum magnitude (MIN_MAG): exp = 000...001, mant = 000...000

The special interpretations are as follows.

- If the exponent field is zero, the number is treated as a "denormal" (subnormal) number. Note that the value 0 is contained within this as the mantissa field being all zeros. This also has the strange effect of being able to represent +0 and -0, which are sometimes treated as exceptional values rather than denormal values.

- If the exponent field is all 1s then the value is treated as an exceptional value, representing a result other than a real-number.

  o Whether infinity is treated as a kind of NaN is dependent on the format. For IEEE based implementations, infinity is treated as distinct from a NaN. For the present purposes infinity and NaN will be treated as separate concepts, referred to collectively under the umbrella term "exceptional values". In some formats such as IEEE 754 infinity is distinguished from NaNs by means of the mantissa (mant) field: if mant=0, then it's +/- infinity, but if mant is non-zero, then it's a NaN (e.g. resulting from trying to take the square root of a negative number). In some implementations information on the type of NaN may also be encoded into the non-zero mantissa field value. Sometimes +/- 0 are also treated as exceptional values.

**B.2. Subnormal values**

Subnormal values are real numbers but values which are too small to be represented according to the formula for normal values. The formula $(-1)^{sign} * 2^{(exp-bias)} * 1.mant$ for a normal floating point number does not allow to represent zeros (note how the most significant/left-hand 1, i.e. leading 1, of the significand is implicit in the normal floating point formula). Nor does it allow to represent a number between 0 and MIN_MAG in magnitude. It is desirable to be able to represent the value of zero, and also numbers smaller in magnitude than the minimum magnitude (MIN_MAG) given in the normal formula by exp = 000...001, mant = 000...000. Subnormals/denormals provide for "gradual underflow", such that values remain representable for more orders of magnitude as they tend towards 0, rather than abruptly get clipped to 0 ("abrupt underflow").

Therefore to accommodate this, if the exponent field is all zeros (exp=0), the floating point format is instead interpreted according to a different formula that does not have the implicit 1 in the significand, i.e.:

$$value = (-1)^{sign} * 2^{(1-bias)} * 0.mant$$

Note that exp = 0, mant = 0 is a particular case of this that equals zero.

**B.3. Exceptional values**

Exceptional values are values that are not part of the set of Real numbers. Some operations (or attempted operations) will give results that are not real numbers, or simply do not result in a numerical values at all. For example division by zero gives infinity, or the square root of a negative number would give an imaginary value which cannot be represented in the floating point number format.

To accommodate these, if the exponent field is all 1s (i.e. exp is set to its maximum value) then the floating number format is again interpreted differently than for normal or subnormal values, and instead is taken to mean the result of the operation does not have value that can be represented numerically by the number format.

For such exceptional values, the mantissa bits are often also be used as a payload to specify something about the type of exceptional value. Most formats including IEEE 754 distinguish between infinity and other non-real results. For instance, as in IEEE 754 standards, if the mantissa field is zero as well as the exponent field being all 1s, then this is taken to represent infinity; whereas if the mantissa field is non-zero while the exponent field is all 1s, this is taken to represent a NaN (other than infinity). Note also this means there is one +/-infinity representation, but there are many ($2^{23}-1$ for F32) +/-NaN representations. Thus a type of the NaN may optionally also be encoded into the mantissa field. E.g. this could be used to distinguish canonical NaNs from non-canonical NaNs, and/or to indicate a cause of the NaN. Similarly the mantissa bits also can make the distinction between "signalling NaNs", which have the mantissa leading bit unset, and "quiet NaNs", which have the mantissa leading bit set. Signalling NaNs are intended to be input by the programmer for diagnostic purposes, whereas quiet NaNs are output by the arithmetic hardware to distinguish them from the former when exceptions occur. These notions are included in the IEEE-754 standard.

A canonical NaN is the default NaN to use if it is not desired to encode any further information. Many implementations do not care about the type of NaN but do want to differentiate between a NaN generated by an operation or just random data that happens to be a NaN and hence specify that all generated NaNs are the same "canonical" NaN. In RISC-V and other formats, canonical NaN has a mantissa field with the MSB high and the rest low.

An example of indicating a cause of the NaN would be to differentiate a generated new NaN, e.g. square root of -1, with a NaN which is passed on as a result of an operation on a previous NaN (as any operation on a NaN has a NaN as a result).

It is not strictly essential to distinguish between infinities and NaNs in all possible formats that could be devised, and instead infinities could be represented the same way as NaNs (effectively treating infinity as kind of NaN). E.g. this could be done by just using the exponent field as all 1s to represent any exceptional value and ignoring the mantissa field for exceptional values, thus treating all exceptional values the same. Some reduced-precision formats such as the FP8 E4M3 also remove infinities altogether and reserve a single, "all-ones" mantissa-exponent combination to represent NaN instead. This allows to extend the exponent range by one value in the FP8 format (one could also normalise FP8, i.e. FP8_norm, increasing the exponent width by one, and recoding this all-ones infinity into a cheaper representation). However in practice most conventional formats will use the mantissa field to distinguish at least between infinities and NaNs as distinct kinds of exceptional value, and in many cases to distinguish between different types of NaN (e.g. canonical vs. non-canonical).

### B.4. Normalization

If an operation performed by a floating point instruction (when executed by the FPU 122) combines a normal value with a subnormal value, e.g. to divide one by the other, then it may be desirable (e.g. for LUT size reduction) to normalize the normal and subnormal values into a common, normalized format that does not encode the normal and subnormal values according to different schema. Other types of operation such as addition or multiplication, etc., may also benefit from normalization when combining a normal and subnormal value, The benefits of normalizing to a common format may become even more pronounced when considering chains of operations (e.g. where it may be desirable for a multiplication to keep the values normalized for the benefit of one or more further steps in the chain).

The unnormalized number formats may be governed by a standard such as IEEE 754. However the normalized format is not currently standardized.

On a point of terminology, note again that "normal" refers to a schema within an unnormalized format whereby the significand is taken to have an implicit leading 1 that is not included explicitly in the bits of the mantissa field (i.e. significand = 1.mant), and "subnormal" (or "denormal") refers to a schema within the unnormalized format for representing small magnitude values whereby the significand does not have an implicit a leading 1. Being "normalized" on the other hand refers to converting normal and subnormal values into a normalized format which uses a common schema for representing both types of value. Therefore normalized is a distinct concept from normal, and contrasting unnormalized vs. normalized formats is distinct from contrasting normal vs. subnormal values. The "normalized format" could also be referred to as an "extended exponent format", "extended range format" or "common-exponent-field format".

As one way to perform the normalization, both numbers are temporarily extended to a normalized format with a wider exponent range (at least one extra exponent bit in the exponent field). After the operation is done in the normalized space the result may be converted back to the input format (or at least conceptually the operation and conversion back may be described this way - in practice, in some cases, the conversion may be broken down into shifting the bits of the mantissa field and adjusting the exponent and merged with the rest of the operation).

Figure 3 shows an example implementation of a normalized format, which has only a single extra bit added to the exponent field compared to the corresponding standard, unnormalized format from which it is converted (e.g. IEEE format). The e bits of the normal or subnormal exponent field of the unnormalized format are re-encoded into the e+1 bits of the normalized format (there is not a one-to-one mapping between the e bits in the unnormalized format and any of the e+1 bits in the normalized format). The mantissa field may be the same size, m bits, in both the unnormalized format and the corresponding normalized format. In both Fx and Fx_norm there are m mantissa bits. For normal numbers there is a one to one mapping of mantissa field between unnormalized and normalized formats. For subnormal numbers (where the implicit MSB is 0) the leading high bits of the mantissa field are shifted left to the implicit bit position in the normalized format, and the exponent is adjusted accordingly.

For example in embodiments the unnormalized input format may be one of the standardized IEEE 754 formats such as FP16, FP32, FP64 or FP128 each having a single sign bit, an m-bit mantissa field and an e-bit exponent field as shown in Figure 2. In this case the corresponding normalized format has a single sign bit, an m-bit mantissa field and an exponent field of e+1 bits (one extra bit compared to the corresponding standard, unnormalized format). Such a normalized format may be labelled herein as an "Fnorm" format. If the unnormalized format is labelled Fx (e.g. IEEE standard FPx) where n is the bit width of the unnormalized format, then the corresponding (n+1)-bit Fnorm format may be labelled herein Fx_norm (where the additional bit is taken as read: i.e. the x in "Fx_norm" refers to the width of the corresponding unnormalized format from which it is normalized).

So for example if the input format is FP16 with m = 10 bits and e = 5 bits, the corresponding normalized format may be a 17-bit Fnorm format (F16_norm) with 10 mantissa field bits and 6 exponent field bits (and one sign bit). And if the input format is FP32 with m = 23 bits and e = 8 bits, the corresponding normalized format may be a 33-bit Fnorm format (F32_norm) with 23 mantissa field bits and 9 exponent field bits (and one sign bit). And if the input format is FP64 with m = 52 bits and e = 11 bits, the corresponding normalized format may be a 65-bit Fnorm format (F64_norm) with 52 mantissa field bits and 12 exponent field bits (and one sign bit).

In the case of a normalized format of the form shown in Figure 3, the formula for the normalized value is (following the convention of using a ' symbol to indicate a normalised entity):

$$\text{value (normalized)} = (-1)^{\text{sign}} * 2^{(\text{exp'}-\text{bias'})} * 1.\text{mant'}$$

(note also that this no longer includes a way to represent zero, which therefore makes +/-0 "exceptional" values). In embodiments the bias of the normalized format (bias') may stay the same as in the unnormalized format (i.e. bias' = bias), or may be different (bias' ≠ bias). There is freedom for the designer in his respect. In the case where bias' = bias, one would need to allow negative biased exponent values, moving from the conventionally unsigned format to a signed (and biased) exponent form, but with the 2's-complement assumed here that doesn't make much difference.

The normalized format enables operations to combine normal and subnormal values, such as to add, multiply or divide. E.g. if an FP16 normal number and an FP16 subnormal number are to be multiplied together, then they each get converted to a 17 bit "Fnorm" format for the purpose of the multiplication, and then the result may later be converted back to FP16 as an output.

Note: while the normalized format does not intrinsically have the concept of normal and subnormal values (in the normalized format they are both represented on the same scale according to the same schema), nonetheless the two values to be operated upon may be referred to herein as subnormal and normal values even after conversion to the normalized format, in the sense that they have originated from normal and subnormal values in the unnormalized input format.

The conversion (re-encoding) from unnormalized format to normalized format (F to F_norm) comprises shifting the mantissa and adjusting the exponent. Specifically, re-encoding a subnormal (denormal) unnormalized value to a normalized value comprises:

- first detect whether the value in question is a normal or denormal number (by checking whether the exponent is zero); then
- if it is subnormal (denormal), do a leading zero count on the bits in the mantissa field mant;
- then shift the bits of the mantissa field left by an amount equal to the leading zero count (LZC ) plus one, i.e. mant' = mant << (LZC+1) (the additional shift of one is because the MSB after shifting by the LZC is now high and will become the implicit high bit of the mantissa, so that is shifted out as well and the rest is the mantissa); and
- adjust (subtract from) the exponent field by an amount equal to the difference in the biases of the normalized and unnormalized format minus the shift in the mantissa, i.e. exp' = (bias'-bias)-shift, where shift = LZC+1. To elaborate on this last step, exp is 0 for a denormal (subnormal), which means the exponent is to be interpreted as 1-bias, and so exp' is re-biased to 1+(bias'-bias), which is then corrected to 1+(bias'-bias)-(1+shift) = (bias'-bias)-shift.

And re-encoding a normal unnormalized value to a normalized value comprises:

- if the bias is not changed, then the re-encoding is just appending a zero MSB (most significant bit) to the exponent field, i.e. exp' = {0, exp} where {...,...} represents a concatenation (in Verilog notation). If the bias is different then exp' = exp + (bias'-bias). Typically, if following the IEEE bias method, this difference only changes the top two bits of the exponent as described elsewhere herein, and is thus simple to implement. E.g. for an 8-bit exponent with bias 127 to a 9-bit F_norm exponent with bias' 255, the difference is 128 which means only bit 8 and 9 are changed and so only a single half adder is needed. In this case, as the mantissa stays the same for normal values the whole re-encoding consists of a single half adder for those.

De-normalizing back to the unnormalized format (F_norm to F) comprises, for a subnormal value:

- check that the value in the exponent field exp' (in the normalized Fx_norm format) is smaller than 1-bias (of the unnormalized Fx format) (because an exponent of less than 1-bias in the normalized format is a subnormal in the unnormalized format);

- if it is, then the exponent in the normal form is exp = exp' - bias'. The mantissa also needs to be shifted right by an amount A, i.e. mant = 1.mant' >> |A|, where A = (-bias + 1) - (exp'

  - bias'), which simplifies to A = 1-bias+bias'-exp' when the biases are different, or simply A = 1-exp' when biases are the same. In other words the shift in the mantissa is equal to the exponent in the normalised form adjusted to the bias of the unnormalized form, which is a negative number meaning a right shift, and the additional shift of 1 is because for the denorm correction; and

- set the exponent bits of the normalized exponent field exp' to all zeros (i.e. exponent = - bias).

And de-normalizing normalized value back to a normal in the unnormalized format comprises:

- if the bias is not different, just removing the MSB from the exponent field. If the bias is different then exp = exp' - (bias'-bias), and the zero msb is dropped. I.e. exp' is now larger than 1-bias, so it is in range of the unnormalised format and just needs its bias adjusted. And the mantissa does not need to be adjusted, and the exponent needs a subtraction of (bias'-bias). If they are the same, then the exponent's msb is simply dropped, otherwise like above typically only need a single half subtractor is needed.

A more detailed mathematical breakdown of a procedure for normalizing and denormalizing normal and subnormal values is given below. If the FPU 122 supports operations which combine values of different precision (e.g. an instruction which operates on one single precision value and one double precision value), then each value would simply be normalized according to its own format. E.g. the FP32 would be normalized to 33-bit Fnorm (F32_norm) and the FP64 would be normalized to 65-bit Fnorm (F64_norm), and the operation performed on the two different precision Fnorm values.

Exceptional values such as NaNs and infinities may also be represented in the Fnorm format or other such normalized format. The straightforward way to do this would be to still use all 1s in the exponent field to indicate an exceptional value, as in the corresponding unnormalized format. However, as will be discussed in more detail shortly in section C, the present disclosure recognizes a more efficient encoding.

**B.4.1 Normalizing**

Assuming a floating point number f in denormalized IEEE754 *F.s.e.m,* e.g. single precision F32 is *F1.8.23,* then its normalized form f' is given as follows.

$$\mathrm{normalize}((f)_{Fs.e.m}) \quad = (f')_{Fs.e.m_{\mathrm{norm}}}$$

where

$$sign \quad = f[(s + e + m - 1){:}(e + m)]$$

$$exp \quad = f[(e + m - 1){:}m]$$

$$mant \quad = f[(m - 1){:}0]$$

$$bias \quad = 2^{e-1} - 1$$

$$x \quad = (-1)^{sign} \cdot 2^{exp-bias} \cdot 1.mant$$

and

$$sign' \quad = \begin{cases} 0 & \text{if } x \geq 0 \\ 1 & \text{if } x < 0 \end{cases}$$

$$exp' = \begin{cases} 0 & \text{if } x < 2^{-(2^{e-1}-1)-m} \\ 2^e - 1 & \text{if } x \geq 2^{2^{e-1}} \\ \lfloor \log_2 |x| \rfloor + bias' & \text{otherwise} \end{cases}$$

$$mant' = \begin{cases} 0 & \text{if } x < 2^{-(2^{e-1}-1)-m} \\ 0 & \text{if } x \geq 2^{2^{e-1}} \\ |x| \cdot 2^{-(exp'-bias')+m} & \text{otherwise} \end{cases}$$

$$bias' = 2^{e+1-1} - 1$$

$$x' = (-1)^{\text{sign'}} \cdot 2^{exp'-bias'} \cdot 1.mant'$$

$$f'[(s+e+1+m-1):(e+1+m)] = sign'$$

$$f'[(e+1+m-1):m] = exp'$$

$$f'[(m-1):0] = mant'[(m-1):0]$$

which can be optimized to

$$sign' = sign$$

$$exp' = \begin{cases} 0 & \text{if } exp = 0 \wedge mant = 0 \\ (1 - bias) + bias' - (1 + \text{lzc}(mant)) & \text{if } exp = 0 \wedge mant \neq 0 \\ (exp - bias) + bias' & \text{if } exp \neq 0 \end{cases}$$

$$mant' = \begin{cases} (mant \cdot 2^{1+lzc(mant)})[(m-1):0] & \text{if } exp = 0 \wedge mant \neq 0 \\ mant & \text{if } exp \neq 0 \vee mant = 0 \end{cases}$$

Note that *[i:j]* indicates bit-vector slicing for element *i* down to *j* inclusive, *lzc()* is the leading zero count function, and that *x'* equals x. Also note that the bias could be different in the general case.

**B.4.2 Denormalizing**

Similarly for denormalizing with *f'* in normalized form $Fs.\,e.\,m_{\text{norm}}$ and *f* in denormalized IEEE754 format $Fs.\,e.\,m$ we have:

$$\text{denormalize}((f')_{Fs.e.m_{\text{norm}}}) = (f)_{Fs.e.m}$$

where

$$sign' = f[(s+e+1+m-1):(e+1+m)]$$

$$exp' = f[(e+1+m-1):m]$$

$$mant' = f[(m-1):0]$$

$$bias' = 2^{e+1-1} - 1$$

$$x' = (-1)^{\text{sign}'} \cdot 2^{exp'-bias'} \cdot 1.mant'$$

and

$$sign = \begin{cases} 0 & \text{if } x' \geq 0 \\ 1 & \text{if } x' < 0 \end{cases}$$

$$exp = \begin{cases} 0 & \text{if } x' < 2^{-(2^{e-1}-1)} \\ 2^e - 1 & \text{if } x' \geq 2^{2^{e-1}} \\ \lfloor\log_2 |x'|\rfloor + bias & \text{otherwise} \end{cases}$$

$$mant = \begin{cases} 0 & \text{if } x' < 2^{-(2^{e-1}-1)-m} \\ 0 & \text{if } x \geq 2^{2^{e-1}} \\ |x'| \cdot 2^{-(exp'-bias')+1} & \text{if } 2^{-(2^{e-1}-1)-m} \leq x' < 2^{-(2^{e-1}-1)} \\ |x'| \cdot 2^{-(exp'-bias')+m} & \text{otherwise} \end{cases}$$

$$bias = 2^{e-1} - 1$$

$$f[(s+e+m-1):(e+m)] = sign$$
$$f[(e+m-1):m] = exp$$
$$f[(m-1):0] = mant[(m-1):0]$$

which can be optimized to

$$sign = sign'$$

$$exp = \begin{cases} 0 & \text{if } exp' = 0 \wedge mant' = 0 \\ 0 & \text{if } -(2^{e-1}-1) - m < exp' - bias' \leq -(2^{e-1}-1) \\ exp' + (bias - bias') & \text{otherwise} \end{cases}$$

$$mant = \begin{cases} (1.mant' \cdot 2^{((exp'-bias')+bias+1)})[(m-1):0] & \text{if } -(2^{e-1}-1) - m < exp' - bias' \leq -(2^{e-1}- \\ mant' & \text{otherwise} \end{cases}$$

$$x = (-1)^{sign} \cdot 2^{exp-bias} \cdot 1.mant$$

where *f'* is exactly representable in *f*.

## B.5. Implementing the Normalization

Conventionally the normalization and de-normalization is all done internally within the floating point unit (FPU) 122 as part of the floating point operation (via the normalization and denormalization logic 124, 126, which may be part of the FPU 122). In this case the normalized format is never used in the floating point registers, which comprise only standard format register 112. Values are loaded into the registers 112 in the standard, unnormalized form (e.g. IEEE format). The FPU 122 operates on the values from the standard-format registers 112 and converts internally to a normalized format. Any value output back to a register is then always in the original, unnormalized input format (or one of the input formats), e.g. a conventional IEEE format such as FP16, 32 or 64, etc. Hence the normalized format is invisible to software. This is the first approach described earlier in section A.

In other words the FPU 122 is operable to interpret the operand value in each of the plurality of registers 112 according to either a normal format or a sub-normal format, wherein each of the normal and subnormal formats comprises a mantissa field of m bits of the respective sequence of bits and an exponent field of e bits of the respective sequence of bits but the normal format applies an implicit leading 1 to the significand wherein the subnormal format does not. The FPU 122 is configured so as when performing an operation combining a normal value in the first format from one of said plurality of registers with a subnormal operand value in the subnormal format from another of said plurality registers, to re-encode each of the normal and sub-normal values internally within the FPU 122 into a respective normalized value in a common normalized format comprising at least one extra exponent bit (e+1 exponent bits), as well as typically the same number m of mantissa bits (and the sign bit assuming signed). The FPU then performs the operation and converts the result back to the first format (which in practice may mean the conversion being fused with the operation), and the result is written back to a destination register 112 in the first format.

In an alternative implementation however, values may actually be held in the floating point registers in the normalized format. In this case values may never be held in the any of the registers 110 used for floating point operations in the unnormalized format (only in memory or other memory mapped devices), and the floating point registers may comprise only normalized format registers 114. E.g. for FP64 values each floating point register 114 may be a 65-bit wide register for holding the values in the normalized form including the extra bit. However any store operation that moves a result back to memory would convert form the 65-bit Fnorm format ("F64_norm") back to the conventional 64-bit FP64 format. Hence in memory the software still only sees the unnormalized format. This is the second approach discussed earlier in section A.

In such embodiments, the normalization logic 124 is configured such that when any load operation is performed by the LSU 120 to load a value from memory 116 (or other memory mapped location) into a floating point register 114, the value is automatically converted in hardware into the normalized (e.g. Fnorm) format for placement into the destination register 114. Vice versa, the de-normalization logic 126 is configured such that for any store operation performed by the LSU 120 to store a result back to memory, the result is automatically converted in hardware back into the conventional, unnormalized (e.g. IEEE) format for placement in the destination memory address. There may also be moves performed by the move logic 130 to move values between the normalized-format floating point registers 114 and other register such as standard-format registers 112 or general purpose registers. In this case the normalization logic 124 is configured to automatically convert any value from unnormalized to normalized form when moved from a non-normalized format register to a normalized format register 114, and vice versa the de-normalization logic 126 is configured to convert any value from normalized to unnormalized form when moved from a normalized format register to a non-normalized format register. The normalization and de-normalization logic 124, 126 may be shared between the LSU 120 and the move logic 130, or each of the LSU 120 and the move logic 130 may comprise its own instance of the normalization and de-normalization logic 124, 126.

Having the extra bit of the normalized/Fnorm format included in the registers of the register file 110 simplifies the implementation, since it is not necessary to keep converting back and forth between unnormalized and normalized formats in a chain of operations operating on register values. Instead the conversion back to the unnormalized format (e.g. FP64) only needs to be done when the final result of the chain is stored back to memory.

A hybrid design would also be possible comprising some standard-format floating point registers 112 and some normalized-format floating point registers 114. And/or a design could allow both normalized and unnormalized values to be stored in the same register on different occasions, assuming some means is provided (such as an additional 1-bit flag) to distinguish between which type of value is currently held in a given register.

In embodiments the normalized format is always invisible to software, whichever of the two implementations above is used, because e.g. the RISC-V ISA (and others) are defined to operate on IEEE754 values and hence instructions must always "see" that encoding as CPU state.

**B.6. NaN-Boxing**

Typically it will be desired that different precision values can be held in a given one of the registers 110 on different occasions. E.g. in the standard-format registers 112, a 64-bit register may sometimes be used to store a 64-bit (double precision) value and sometimes a 32-bit (single precision) value, etc. Or in the normalized format registers 114, it may be desired that a 65-bit register can sometimes hold a 65-bit Fnorm ("F64_norm) value and sometimes hold a 33-bit Fnorm ("F32_norm") value, etc.

One way to support this is, when a floating point number is held in a register of a certain width in a format of a narrower width than that of the register, then the value is right-aligned (stored in the least significant position) and the unused left-most (most-significant, i.e. leading) bits are all set to one. E.g. if a 32-bit FP number is stored in a 64-bit register (or a 33-bit "F32_norm" number is stored in a 65-bit register), then the actual value is placed in bottom 32 bits, and the top 32-bits are all set to 1. This setting of the unused MSBs to 1 is called "NaN boxing". It is done automatically by hardware of the processor 100 when a narrower-format value is placed in a wider register, whether by a load from a memory address or a move from another register, or when generating a narrower value to be placed in a register (e.g. an add or multiply on narrower values).

In other words, whenever a smaller width number format is used in a register where a wider number format can also be used, it is 'NaN-boxed', meaning it is right aligned and the additional more significant bits are set high. NaN-boxing is introduced in the RISC-V ISA, but the same idea could also work in other schemes, e.g. zero- or sign-extending. The term NaN-Boxing as used herein does not limit to any specific instruction set architecture (ISA), and more generally can refer to concept of right aligning the narrower value and padding the MSBs of the wider register.

NaN-boxing ensures that the narrower number represents a NaN in the wider format. This means that in turn, if the NaN-boxed value is then operated on by an instruction of a wider format, the result of that instruction will also be a NaN in the wider format.

Note that each type of floating point instruction in the instruction set will be defined to expect source values of specific formats with specific widths (and to provide a result in a specific format) - e.g. if the processor 100 supports FP32 and FP64 then the instruction set may include both: i) a 32-bit multiply instruction type which takes two FP32s (or 33-bit F32_norms) as its source values (multiplier and multiplicand), and outputs a result in FP32 (or 33-bit F32_norm); and ii) a separate 64-bit multiply instruction type (with a different opcode than the 32-bit variant) which takes two FP64s (or 65-bit F64_norm) as its multiplier and multiplicand, and outputs a result in FP64 (or 65-bit F64_norm). Mixed precision operations are possible in some processors but each input value is still expected to conform to a specific respective format. E.g. if a mixed-precision multiply instruction type is provided which multiples an 32-bit multiplier with a 64-bit multiplicand, then the first input has to be 32 bits wide and the second input has to be 64 bits wide to generate a valid numerical result.

RISC standards specify that if an instruction attempts to operate on a value of the wrong width for the instruction type (e.g. due to an error by the programmer), then the result should be a NaN. NaN boxing ensures that this happens.

E.g. say that due to an error in the software by the programmer, a 64-bit FP arithmetic instruction tries to operate on a 32-bit value. RISC specifies that the 32-bit value is NaN-boxed, and that the result of arithmetic instructions on a source NaN is another NaN. Thus the result of the 64-bit arithmetic instruction on the 32-bit NaN-boxed value will be a NaN. Because the 32-bit value is NaN boxed, then it looks like a NaN anyway to a 64-bit operation (remember that a NaN is represented by the exponent bits all being set to 1). And since RISC also specifies that any operation on a NaN should also result in a NaN, then this automatically gives the correct specified result (i.e. NaN).

Further, if a 32-bit operation tries to operate on a 64-bit value, then the fact that the top 32 bits are not all 1s indicates that something has gone wrong. The FPU 122 is configured to check the top 32 bits are all 1s whenever it does a 32-bit operation (and similarly for other widths), and if they are not all ones the operation's result will be a NaN (in F32 so also NaN-boxed).

NaN boxing and normalization can be combined. E.g. for a 64-bit register holding a 32-bit NaN-boxed value, the 33 LSB hold the 33-bit F32_norm format version of the number (normalized 32-bit SP value), and the 32 MSB are all 1s (the NaN boxing).

As will be discussing in more detail later, in embodiments the presently disclosed scheme of encoding exceptional values can also be exploited to incorporate and optimise NaN-boxing.

## C. Encoding Exceptional Values in a Normalized Format

As mentioned earlier, conventionally in an unnormalized format such as FP16, FP32 and FP64 etc., an exceptional value (e.g. infinity or NaN) is indicated by setting all the exponent field bits to 1. This same encoding of exceptional values could simply be transferred over to a normalized format as well. However this is inefficient and it is recognized herein that normalized formats present an opportunity for a more efficient encoding of exceptional values. The renormalized format provides some extra encoding space which enables a different encoding of exceptional values.

Particularly, the normalized format adds an extra bit to the exponent field compared to the unnormalized format (see again Figure 3 in comparison with Figure 2). Adding an extra bit to the exponent field doubles the range of the exponent field. However, it is recognized herein that the full extent of the extended range of the exponent field of the normalized format is not all needed for the encoding of the re-encoded exponents of the normalized numerical values. Actually, the normalized format only needs an extra range of exponent values equal to the number of mantissa field bits of the normalized, input format in order to encode the new normalized exponents of both values in the normalized format. The reason is that in order to re-encode, the subnormal significand is changed from 0.mant to 1.mant by multiplying the mantissa field by a power of two (shifting left, 2^shift) and adjusting the exponent (subtracting shift from exp). Since the shift will be a maximum of m (mantissa) portions, this will only require subtracting up to m from exp (and m is very likely to be much smaller than the range extension of exp in the normalized format).

Another way of looking at it is that when an IEEE F32 (F1.8.23) number is converted to a F1.9.23 number (for example), there are a lot of values within the range of F1.9.23 that will never occur, so one can slightly adapt the format (to non-IEEE compliant) and make use of that.

Hence according to the present disclosure, an otherwise-unused subrange comprising one or more exponent-bit combinations within the extended exponent range of the normalized format (being otherwise unused for expressing any possible non-exceptional numerical value) may be used to represent one or more possible exceptional values. Embodiments may also use the unused range to encode, into the exponent field of the normalized format, information about the nature of the exceptional value, e.g. whether it is an infinity or NaN, and/or a type of NaN such as whether it is a NaN-boxed NaN.

This encoding is more efficient than the conventional approach of encoding the fact of being an exceptional value into the exponent field and encoding the type of exceptional value into the mantissa field, as the disclosed encoding requires inspecting fewer bits to detect than the conventional encoding. Conventionally the FPU has to check that all the bits of the exponent field are 1, and then check further bits of the mantissa field to detect the type of exceptional value. But with the special normalized (e.g. Fnorm) encoding, it is possible to use a special sub-range within the extra range afforded by the normalized exponent in order to indicate an exceptional value using fewer bits, and in embodiments also encode information about the nature of the exceptional value.

An example is shown in Figure 3A.

The maximum value of the exponent field exp in the unnormalized format (for an actual numerical value) is all 1s except the LSB. So for FP32 for example (e=8 bits), that would be exp = 11111110. Since the additional range of the exponent field (exp') needed to express numerical values in the normalized format (with 9 exponent bits) is only slightly greater, this means that only some exponent field values in the extended range (will be used to express possible numerical values in the normalized format, but other exponent field values in the extended range (will never be used to express numerical values in the normalized format.

For example, for F32, the maximum exponent is 127, encoded as 11111110 with bias 127 in the 8 exponent bits. The range is extended on the lower end (since the normalization comprises subtracting from exp). So if the range is extended to 9 bits and the normalized format is re-biased with 255, then the maximum exponent value used to express an actual exponent becomes 101111110 which effectively means the two top bits can never be both high. (For the minimum exponent -126 the top two bits can also not both be zero, but when including the subnormals it can). In other words if re-biased, 00000001 becomes 010000001 (i.e. add 128 because the new bias is 255 and the old was 127), and it will extend in range down to 010000000, 001111111, etc. Thus with re-biasing, the largest exponent value then becomes 011111110'b+128=101111110, hence the top two bits will never be both high (11) for normalised numerical values (where the 'b is Verilog notation). Alternatively if the normalized format is not re-biased compared to the unnormalized format (bias'=bias), then 00000001 as smallest exp' would extend in bits to 000000001 (e+1=9 so an additional zero) and then extend in range to 000000000, 111111111 (-1 in 2's complement), 111111110, etc. In this case the top two bits would never be 10 if the normalized format is not re-biased, and it is assumed the mantissa isn't big enough to extend the exp' to there.

Therefore as shown in Figure 3A, a subset of the two or more of the most significant (left-most) bits of the exponent field exp' of the normalized format may be used to represent one or more possible exceptional values. For example, a first subset 301 of at least the two most significant bits (but fewer than e bits) of the exponent field exp' of the normalized format may be used to encode whether or not the current value expressed by the normalized value is an exceptional value - i.e. the fact of being an exceptional value. As explained in the preceding paragraph, if at least the top two MSBs are 1, this combination can never occur in the normalized format for expressing actual numerical values. Therefore if a first subset 301 of the two most significant bits are both 1s, this may be taken to represent the fact of being an exceptional value.

Thus by using a different encoding than in the unnormalized format, the FPU 122 can avoid having to check that all exponent field bits are high in order to detect an exceptional value. Instead, to detect presence of an exceptional value, the FPU 122 is configured to only read a subset of the bits of the exponent field to detect a bit combination not occurring within the range of exponents used to express any non-exceptional numerical values. In embodiments this is the first subset 301 and the check is to detect that both MSBs are 1. However it is not excluded that other unused sub-ranges could be found for this purpose within the extended exponent range of the normalized format.

In embodiments, as well as detecting the mere fact of whether or not a value is exceptional, it may also be desired to encode one or more pieces of information about a type of the exceptional value. Once it is determined that the first subset 301 comprises a combination of bit-values that does not occur in any possible numerical values (e.g. the two MSB of the exponent field are both 1), then any further combination of one or more bit values of one or more further bits 302 of the exponent field exp' in combination with the first subset 301 must also be available to use for other purposes. Hence in embodiments, a further portion 302 of the exponent field exp' of the normalized format may be used to encode one or more pieces of information about a type of the current exceptional value. The further portion 302 may be exclusive of the first portion 301 and comprises one or more bits, e.g. the one or more next-most significant bits after the first portion 301. Preferably the first subset 301 and further portion 302 together are still fewer bits than the e+1 bits of the extended exponent field of the normalized format, and may be fewer than the e bits of the original, unnormalized format.

The further portion 302 may comprise one bit used to indicate whether the exceptional value is an infinity or a NaN. Alternatively or additionally, the further portion 302 may comprise one or more bits indicating a type of the NaN (e.g. whether a signalling NaN or non-signalling NaN or whether a canonical or non-canonical NaN) and/or a cause of the NaN (e.g. square root of a negative number, etc.), or whether the NaN is a Nan-boxed NaN. For example in embodiments the further portion may comprise at least two bits following the first portion (e.g. the next two or more most-significant bits): one bit to indicate whether the exceptional value is an infinity or NaN, and one or more bits to indicate a type of the NaN if it is a NaN.

In a conventional unnormalized format such as the IEEE 754 formats, the fact of being an exceptional value is encoded by the exponent field being all 1s, and the type of exceptional value is encoded into the mantissa field. In this case the FPU 122 has to read all the exponent bits and one or more mantissa bits to detect an exceptional value of a particular type. In fact in the conventional case, the FPU 122 has to check that all mantissa field bits are zero to determine when it is an infinity, and would have to check multiple mantissa bits that fall into the NaN-boxing top bits to determine whether it is NaN-boxed or not. So for F64, that's 32-11-1=20 mantissa field bits to check for NaN-boxing and 32 more for infinity/NaN/zero.

According to embodiments disclosed herein on the other hand, by encoding the type differently, the FPU 122 can detect the type (e.g. inf vs. NaN) from only the exponent field without checking the mantissa field and preferably without checking all e+1 exponent field bits, and in embodiments by checking e bits or fewer.

For instance the FPU 122 may only be required to check that the top two MSB of the exponent field are 1 to determine whether the value in question is an exceptional value, then the next-most significant bit to tell whether it is an infinity or NaN, and then (in one possible implementation) the next one or more most significant bits to check the type of NaN.

Embodiments preferably also include +/-0 in this encoding, as zero is now no longer part of subnormals, so otherwise it would be required to separately check that all bits are zero (exp' and mant') to know the value is zero.

More generally, it is identified herein that the bits of exp' below the top two being high are usable for any encoding the designer wishes (preferably as long as it includes INF/NaN from Fx). E.g. for F32_norm's 9 exponent bits, there are 7 bits available after the two MSB (301) used to indicate the fact of being an exceptional value, giving a range of 2^7 for encoding further information. To encode NaN-boxed, NaN, Inf, and potentially zero, only requires two further bits, so only four bits need to be read to determine the exceptional value from this set instead of all 32 in F32, and another 5 bits are available to optionally encode yet further information. Therefore there are another 5 bits available in the exponent (range of 2^5) for encoding yet further information, if desired, such as a cause of the NaN.

As discussed in more detail below, in the case of a NaN, one piece of information that may be desirable to encode is the fact that the current NaN is a NaN-boxed NaN. As recognized herein, this is useful because by using a different encoding for NaN-boxed NaNs one can avoid having to check whether all the NaN-boxing bits are high. As discussed earlier, if infinity and NaN are encoded differently than one another, then the FPU 122 can detect them without checking all exponent bits assuming it is executing an instruction intended for the correct width of source value (e.g. a single precision floating point instruction operating on an F32_norm source value). However if NaN-boxing is not encoded in a unique way, then an FPU attempting to execute a wider-format floating point instruction would still need to check a relatively large number of the NaN-boxing bits in order to check that it is not attempting to operate on a narrower format-value (which according to the principle of NaN-boxing - see earlier - should be detected as a NaN in the wider format and hence result in a NaN as the output of the operation). However, by instead encoding a special indication that the current NaN is a NaN-boxed NaN in the exponent field, the number of bits to check can be reduced, and a NaN-boxed narrower-format value can be detected by inspecting only the first subset 301 and further portion 302 of the exponent field exp' of the higher-width format. This is discussed in more detail in the following subsection.

## C.1. Normalising and NaN-boxing

The RISC-V specification allows for using a normalized floating point format (which we call Fnorm) where subnormal numbers are stored normalized internally within the FPU. This recoding must be indistinguishable in functionality compared to when one wouldn't use the recoded format. In addition, RISC-V requires the use of NaN-boxing where a narrower floating point format is represented as a NaN when interpreted in a wider floating point format by setting all more significant bits to 1. To be compliant with RISC-V, the Fnorm format in combination with NaN-boxing should also still support NaNs, infinities and zeros (exceptional numbers in floating point). Embodiments disclosed herein can achieve this by making use of the invalid/unused encoding space in the Fnorm format, which becomes complicated in combination with mixed floating points widths.

Embodiments disclosed herein change the encoding of NaNs and INFs, as discussed earlier. Alternatively or additionally, the encoding may also be used to differentiate between NaNs for NaN-boxing and regular NaNs, to be able to encode everything in the Fnorm bits (which has some unused encoding space). Specifically, when a narrower value is held in a wider format register in NaN-boxed form, thus representing a NaN in the wider format, then according to embodiments disclosed herein, the fact that this is a NaN-boxed NaN (as opposed to another type of NaN) can be encoded into the exponent field of the wider format. Note therefore more generally than padding the unused MSB with all 1s as in the conventional case, NaN-boxing may be defined herein as any scheme placing a narrower-format value in a wider-format register by right-aligning the narrower-format value in the register and padding some or all of the remaining, more significant bits in any way that will cause the floating point logic to recognize the content of the register as a NaN in the wider format.

This different encoding allows to detect whether the number is a NaN-boxed narrower floating point number or was originally already a NaN in the wider floating point format. This information would otherwise require a relatively large number of bits to be analysed in order to detect. The disclosed encoding be exploited in order to require fewer bits to be checked in order to detect a NaN, and to detect a NaN as being a NaN-boxed NaN.

To elaborate by way of example, if the FPU supports only a single number format, e.g. F extension (F32) only, then this is all there is to it. When further wider or narrower formats are also supported, e.g. extensions F and D (F32 and F64), this becomes more complicated. It is now typically necessary to distinguish the number format indicated by the operation, e.g. FADD.S for F32 or FADD.W for F64, and the number format stored in the FPRs (floating point registers) used which could be F32_norm or F64_norm. If the FPRs are wider than the instruction number format, the source operands should be a NaN-boxed version of the narrower format, e.g. if the operations work on F32 values and the FPR is 64-bit, the data in the FPR should be a NaN-boxed F32. A NaN-boxed value has all additional more-significant bits asserted, i.e. bits [63:32] in the previous example. This means such a NaN-boxed F32 will be a NaN in the wider format (F64).

There is no point in normalising the exponent of the NaN in the wider format of a NaN-boxed value - i.e. the value is a NaN so it doesn't need to be normalised. So instead, embodiments may normalise the narrower format (Fn) and then NaN-box the resulting Fn_norm. If we have an operation on the narrower format, the value is now properly normalized, and if we have an operation on the wider format it is still a NaN.

Since we either only use the lower bits of a properly NaN-boxed value or we treat it as a NaN, we don't have to interpret the number format further. This functions in the same way for normalized values, e.g. either use the lower 33-bits in case of a properly NaN-boxed F32_norm or treat it as a NaN in F64_norm.

Because the normalized format has additional encoding space for unused number representation, it can be used to optimise how to store NaN-boxed values. By assigning an exponent range to represent NaN-boxed, the number of bits to check can be reduced. E.g. if the top two exponent bits are high in Fx_norm, it is outside of the regular exponent range, hence this can indicate NaN, with a third bit differentiating between NaN-boxed and regular NaN, avoiding the need to check the remaining exponent bits. So bits [63:61] allows to derive whether it's a NaN-boxed F64_norm, after which bits [31:29] can be checked to derive whether it's a NaN-boxed F32_norm.

To elaborate, in the source, unnormalized format, INF and NaN have the exponent all high and the mantissa zero or not. If INF and NaN are encoded as discussed earlier, then that information is present in the normalized format as well, but not necessarily which type of NaN. A NaN-boxed value is a subset of NaNs in the wider format, with a number of MSBs of the mantissa field high, e.g. F32 has 7 mantissa bits in the top 16bits. Therefore once it is known the value is a NaN, then without any further special encoding of the type of NaN, it would be necessary to check all those top 7 bits in order to know that it's a NaN-boxing NaN. In other words, to detect a NaN as being a NaN-boxed NaN, it would be necessary to check all the bits in the overlap between the NaN-boxing bits and the mantissa field of the wider normalized format. In contrast, by encoding a NaN-boxed value as a separate encoding according to embodiments herein, the need to check this many bits to detect NaN-boxing can be avoided. Consider for example a 65-bit-string. By checking the top 3 exponent bits it can be known if it is a F64_norm regular value, an F64_norm exceptional value (INF/NaN/zero), or a NaN-boxed narrower value. This could then be repeated for the lowest 33-bits to differentiate whether it is a F32_norm or F16_norm, for example. This works because for a 65-bit value it is either a NaN-boxed narrower value or it is a F64_norm and nothing else.

## D. Sign Injection in a Normalized Format

To recap some of the earlier material, if an operation combines a normal value with a subnormal value, e.g. to multiply one by the other, then the FPU has to normalize both numbers to a common format such as Fnorm which has an extra bit in the exponent.

Further, different precision values may be stored in the same register on different occasions. When a narrower (lower precision) value is stored in a wider register, then the value is right aligned and the unused MSBs of the register are all set to 1 (or encoded in some other way that will cause the content of the register to be recognized as a NaN in the wider format). This is called NaN boxing.

NaN boxing and normalization can be combined. E.g. for a 64-bit register holding a 32-bit NaN-boxed value, the 33 LSBs hold the 33-bit F32_norm format version of the number (normalized 32-bit SP value), and the 32 MSBs are all 1s (the NaN boxing).

A sign injection operation is an operation that performs a bit manipulation function on the sign bit of a given number format (i.e. on the bit at the bit position of the sign bit in that format). It is typically performed by execution of a single machine code instruction. The bit manipulation function could be to flip the bit or to set it to a certain value. Flipping a bit means changing the bit to 1 if it is currently 0, and vice versa, changing the bit to a 0 if it is currently a 1. Setting a bit means setting it to a specified sign value, e.g. setting to 1 or copying the sign from another value. For instance in RISC-V the instruction set includes FSGNJ for copying from rs2, FSGNJN for the opposite of rs2's sign bit, and FSGNJX for the XOR of the sign bit of rs1 and rs2. Embodiments below may be exemplified in terms of a sign injection operation that flips the sign bit, but it will be appreciated that this is not limiting.

There will be different versions of the sign injection instruction type for different number formats: e.g. a 16-bit floating point sign injection instruction type for performing a sign injection on a half precision value, a 32-bit floating point sign injection instruction type for performing a sign injection on a single precision value, and a 64-bit floating point sign injection instruction type for performing a sign injection on a double precision value, and so forth. It is designed to be a very simple operation (inexpensive in terms of silicon complexity and/or delay) which simply flips the bit at the sign-bit position of the format for which the instruction is designed. The sign bit is typically the bit at most significant bit-position of any given format.

However, it is recognized herein that problems can occur when a sign injection operation designed form one precision is performed on a normalized value of a different precision (held in a register in NaN-boxed form).

### D.1. Problem with Sign Injection, Nan-Boxing and Normalization

Problems can occur when a sign injection operation is performed on a normalized value held in an Fnorm register (or the like) in a system that also employs NaN-boxing.

The RISC-V ISA (instruction set architecture) requires that an FSGN (floating point sign injection operation) only changes the sign bit and leaves the rest of the bit pattern untouched (where FGSN is used here to refer to any of the RISC-V sign injection operations, which are FSGNJ, FSGNJN, and FSGNJX). In particular NaNs are not sanitised to the canonical NaN. In a sense the sign operations do not perform number format interpretation but only a bit manipulation. This ensures a trivial and very low cost implementation when the values are stored as-is in the FPR (floating point register).

In other words, while it is not likely to be meaningful to, say, perform a 16-bit sign injection on a 32-bit value or vice versa, nonetheless this is something the programmer might do - whether in error or for some deliberate reason not presently foreseen - and the RISC standard prescribes that this should have a predictable result. And because the sign injection operation is intended to be a very low-complexity operation, that prescribed result is that a 16-bit sign injection should simply flip the 16th bit from the right of the FP16 value (the $16^{th}$ least significant bit), and a 32-bit sign injection should simply flip the 32nd bit from the right of the FP32 value (the $32^{nd}$ least significant bit), etc., *even if NaN boxed* (so regardless of whether this is meaningful). A similar requirement could also be implemented in other ISAs, and this is not necessarily limited to the RISC-V specification.

The equivalent operation applied to an Fnorm value is to flip the $17^{th}$ bit from the right ($17^{th}$ least significant bit) for a 17-bit F16_norm value, or flip the $33^{rd}$ bit from the right ($33^{rd}$ least significant bit) for a 33-bit F32_norm value, etc (as the additional exponent bit has moved the sign bit one up, assuming the operation is of a matching format to that of the value).

To generalize, a n-bit sign injection operation will flip the nth least significant bit (bit index n-1) if performed on a standard n-bit FPn value, or flip the n+1th least significant bit (bit index n) if applied to a normalized (n+1)-bit Fn_norm value (assuming in both cases the least significant bit index is 0). The position of the bit flip is defined as being applied at a given offset from the right (counting from the least significant position) since the value could be NaN-boxed in a larger register, and different sized registers could be used in different processor designs. In other words, the sign injection operation will manipulate the bit at the sign position, which it typically above the exponent field; hence the $n^{th}$ bit in FPn and the $n+1^{th}$ bit in FPn_norm, where the first (least significant) bit is the bit at index 0.

If a sign injection is performed on a value represented in the standard, unnormalized form (e.g. FP16, FP32, etc.), such as when held in this form in standard format registers 112, then the sign injection is simple enough regardless of whether the source value is NaN-boxed: a 16-bit sign injection instruction simply flips the bit at the $16^{th}$ least significant bit position in the register, and a 32-bit sign injection instruction simply flips the bit at the $32^{nd}$ least significant bit position in the register, and so forth.

However, if operated on in re-coded, normalized form, e.g. as held in the normalized format registers 114, then complications arise when the sign-change changes the interpretation of the number, for example from NaN-boxed to not NaN-boxed. The ISA compliant result should always be the same as what the result would be if the source value hadn't been represented re-coded in the normalized form. In other words the result as presented to any software must always be the same as if everything had been done in the unnormalized format.

There are five possible sign-injection scenarios to consider. Three of them are non-trivial, where a potential issue is caused by a combination of: a sign injection operation of the wrong width-type, the use of NaN-boxing, and the Fnorm format. See the table below.

Table 2: Sign injection scenarios for NaN-boxed values in a normalized format

| Scenario | Description | Problem |
|---|---|---|
| i) "Narrower op on narrower number" | A narrower-format sign injection operation performed on a narrower-format number. | No issue (I.e. the formats match and changing bit n instead of n-1 suffices.) |

(continued)

| Scenario | Description | Problem |
|---|---|---|
| ii) "Narrower op on wider number" | A narrower-format sign injection operation performed on a wider-format number. | Sign injection changes a mantissa bit in the wider format, which means that for normalized subnormal values, the number will have the wrong value when normalized again. (This issue applies specifically to subnormal values because the mantissa not recoded for normals - for normal values the mantissa bits are the same in unnormalized and normalized form. That is not true for subnormal values where the mantissa bits have shifted in order to normalise.) |
| iii) "Wider op on narrower number | A wider-format sign injection operation performed on a NaN-boxed narrower-format number. | Sign injection turns NaN-boxed narrower value into what looks like a +ve NaN in the wider format. |
| iv) "Wider op on wider NaN" | A wider-format sign injection operation performed on a positive wider-format NaN. | Depending on the relevant mantissa bits, the sign injection either turns a +ve NaN into a -ve NaN, or into a NaN-boxed number (if all relevant mantissa bits are high). A similar thing holds if NaN-boxing is encoded differently (e.g in the top exponent bits as disclosed earlier) but includes the sign bit. It would then become an invalid encoding. |
| v) "Wider op on Wider number" | A wider sign injection operation performed on a wider format number. | No issue |

These scenarios will be elaborated upon below.

## D.2. Scenarios Where No Special Solution Needed - i) Narrower op on narrower number, and v) wider op on wider number

[0148] Consider the scenarios where: i) a narrower-format sign injection operation is performed on a narrower-format, NaN-boxed Fnorm value; or v) a wider-format sign injection operation performed on a wider-format Fnorm value. E.g. a 32-bit sign injection on a 32-bit value stored as a 33-bit Fnorm.

Here there is no real issue. One can just allow the sign injection operation to flip the MSB of the value. For an operation on a matching number format (e.g. narrow-narrow, and wider-wider in the table) there is no need to denormalize/normalize nor take any other special measures, and the FPU 122 can just change the appropriate sign bit.

Table 3: Narrower op on narrower number, and wider op on wider number

| Type | Input | Output | Comment |
|---|---|---|---|
| Narrower operation | NaN-boxed narrower | Changed sign (of Fn_norm) | Normal operation. Here the number format of what is normalized and of which you change the sign match, so we can just change the sign bit only, i.e. bit 16, 32, 64 (starting from 0). |
| Wider operation | Wider | Change sign | Normal operation, as the first case, the number formats match and we can just change the appropriate bit. |

However, scenarios ii), iii) and iv) will require a solution to ensure that the sign injection operation performed in the normalized domain has the same effect as if performed in the unnormalized domain. The problems with these scenarios and some alternative solutions are discussed in more detail below.

**D.3. Solution (a): Ignore MSB when Detecting NaN-Boxing** - **Suitable for scenarios iii) wider op on narrower number, and iv) wider op on wider NaN**

**Scenario iii)** Consider a scenario where iii) a wider sign injection operation is performed on a narrower, NaN-boxed value. E.g. a 32-bit sign injection operation is performed on a 16-bit value stored as a 17-bit F16_norm value NaN-boxed up to 33-bits.

The issue is that the sign injection will change the NaN-boxing, which in turn will affect how the value gets denormalized if no measures are taken to address this. An example of such a case is as follows.

Take for example a NaN-boxed F16 source value, e.g. a normal of value +1.0. Represented in F16 format and NaN-boxed in a 32-bit wide register (e.g. one of the standard-format registers 112)), this would be:

1111111111111111_0_01111_0000000000

where an underscore, "_", represents the delineation between fields according to the interpretation specified by the relevant floating point number format (here the standard, unnormalized format). In this case the fields are (from right to left): the mantissa, exponent, sign bit and NaN-boxing fields. So in this example the mantissa field is 0000000000 (ten 0s), the exponent field is 01111, the sign bit is 0 (representing a positive value since $-1^0 = +1$), and there is a left-hand NaN-boxing portion equal to sixteen 1s to fill out the left-hand side of the 32-bit register.

Now, consider first what would happen if an FSGN.S operation (single precision - i.e. 32-bit - sign-injection operation) was applied to the above value in the *unnormalized* FP domain. The operation changes the sign bit of the value in the register as if it was a 32-bit number, thus giving:

0_11111111_1111111001111 0000000000

So the value becomes a +NaN in F32. In other words, because the MSB (most significant bit) is flipped, the top 16-bits are no longer all 1, so the value no longer looks like a NaN-boxed F16 to the FPU 122 or normalization/denormalization logic 124, 126. Instead any unit of the processor interpreting the value according to the relevant floating-point standard will now see it as an F32 with a +ve sign bit (0 represents positive since $-1^0 = +1$), exponent field all 1s (meaning an exceptional value), and a non-zero mantissa (which specifies that the exceptional value is a NaN rather than an infinity).

This is the target result specified by RISC standards. Remember that isn't necessarily intended to be a useful or meaningful result - the programmer has performed a single-precision sign injection operation on a half precision value, which is probably just a programming error. Put another way, the program has executed an instruction of a type designed for a single precision value on a NaN-boxed half-precision source value. The RISC specification is not concerned with preventing or correcting this, but rather is merely concerned with ensuring there is some predictable, well-defined effect. I.e. the same error should always give the same result.

So if the processor 100 were to operate entirely in the unnormalized domain using standard-format registers 112, then a sign injection operation will always have a predictable, standardized result even of performed on the "wrong" width of source value.

However if the above source value is instead stored re-coded into a *normalized* format in a normalized-format register 114, it becomes:

1111111111111111_0_**01**1111_0000000000

where the bits in bold here show the bits that have been affected by the normalization (one bit has been added, and one bit has been changed because of adding 128 due to re-biasing). I.e. the exponent field is extended by 1 bit and re-encoded. Then if a 32-bit sign injection operation is performed on this to change the sign bit, this breaks the NaN-boxing and makes it an F32_norm when interpreted. That is:

0_111111111_111111**01**11110000000000

where the new bold bit shows the bit that has been changed by the 32-bit sign injection. I.e. to any unit of the processor 100 inspecting the contents of the register, then since the MSB is no longer 1, the contents no longer look like a NaN-boxed Fnorm_16 number, but rather a +ve NaN in Fnorm_32 (sign bit 0, exponent field all 1s, non-zero mantissa field). This per se - i.e. the fact of resulting in a NaN - is the same as happens if the sign injection is performed in the unnormalized domain, as discussed above. I.e. they would both end up as some form of NaN. The mantissa is different so not the same NaN, but because it's still some form of NaN then if interpreted in arithmetic that wouldn't make a difference (if e.g. moved to memory the bit-pattern is different and that might matter to software, but that issue is not the concern herein). However, the problem comes when it comes to denormalize the register contents, e.g. upon a store or move operation - the change to the NaN-boxing will break the denormalization. I.e. the denormalization logic 126 will not see the value as NaN-boxed F16_norm, but instead a +ve NaN in F32_norm. So in the above example, this will denormalize as an F32, by reducing what appears to be the F32_norm exponent field (i.e. the sequence of 1s between the two underscores in this example) by 1 bit, as follows:

0_11111111_111111**00**111110000000000

where the bold bits here now indicate which bits differ compared to the expected result. What has happened is that the extra exponent bit from normalising as F16_norm has wrongly ended up as a mantissa bit in F32_norm, and a bit changes because of normalization.

The above has been illustrated by way of example for a normal number of value +1.0, but the same issue would occur for any NaN-boxed normal or subnormal number of any value.

**Solution (a):** To prevent this, solution (a) as disclosed herein is to ignore the MSB (most significant bit) of the normalized format-register content when detecting whether NaN-boxed for the purpose of normalizing and denormalizing. That is, ignore the sign-bit when determining when the number is NaN-boxed and how it should be interpreted, and then always normalize and denormalize using that number format.

In this solution, at the time of executing the n-bit format sign injection, the FPU 122 simply flips the MSB in the Fn_norm format (bit index n of Fn_norm assuming the LSB index is 0). In other words when executing a sign injection instruction designed for an n-bit wide Fn value, but executing it in the normalized domain, the FPU flips the (n+1)th bit from the right in the source Fnorm register regardless of whether the value in that register is really a Fn_norm or a NaN-boxed value of a narrower Fnorm format. E.g. if it executes a 32-bit sign injection instruction, the FPU flips the 33$^{rd}$ bit from the right in the source Fnorm register 114 even if it actually contains a NaN-boxed F16_norm value. So the FPU simply performs the sign injection in the "dumb" manner described above, and no special functionality is applied at this stage.

Instead according to solution (a), it is only later when the value is denormalized that special measures are taken. Specifically, the denormalization logic 126 is configured so as when denormalizing the value from one of the normalized-format registers 114, to ignore the most significant bit (MSB) for the purpose of determining whether NaN-boxed. This could be when the LSU 120 is performing a store operation to store the value to memory 116 (or other memory-mapped location), or when the move logic 130 is performing a move operation to move it from the normalized-format register 114 to one of the standard format register 112, or any other time when the content of a normalized-format register 114 is read out by software.

So to continue the above example, with this solution the initial sign injection still results in 0_11111111_11111100111110000000000, but when de-normalising it is still treated as NaN boxed despite the MSB being 0, because the other 15 most significant bits are high. The idea is to ignore the MSB when determining whether NaN-boxed, such that the bottom 17 bits are still treated as an F16_norm normalized value. So in the above example, after the sign injection operation we have what looks like a NaN in F32_norm:

0_111111111_11111100111110000000000

However with solution (a) the denormalization logic 126 now knows to ignore the top bit when determining whether NaN-boxed, so the next 15 bits being 1 tell it that this is still a NaN-boxed Fnorm_17, and thus the denormalization logic 126 will interpret this as:

0111111111111111_0_011111_0000000000

(i.e. 16-bits of NaN-boxing, then a 17-bit Fnorm). So if the denormalization logic 126 denormalizes the right-hand side and leaves the 16 left-most bits as they are, it gives the desired, RISC-V compliant target result:

0111111111111111_0_01111_0000000000

= 0_11111111_11111110011110000000000 (in FP32)

This is equal to the target value specified earlier.

This method works because even though usually the number should only be considered as NaN-boxed when all MSBs including the sign are high, if it is used as a wider format it is still a +NaN, so any arithmetic with it will result in a canonical NaN and hence can ignore the (wrong) LSBs. Or if it is used as a narrower format it is not properly NaN-boxed and also should be considered a NaN ignoring the LSBs.

To elaborate, it is desirable that any arithmetic performed on a sign-injected NaN-boxed Fnorm (e.g. an add, multiply or divide instruction) should result in a canonical NaN, because an arithmetic operation could be performed on the content of an Fnorm register in between a sign injection operation and a store or move operation being performed on that register, and the result of attempting to perform any arithmetic on a NaN should be to output another NaN. If performing an operation requiring denormalization (such as a store or move) on the result of a wrong-width sign injection operation - such as to store it to memory, move to a standard register, or get the value from the register to output it to the software - then the correct, specific target value must be output, i.e. the exact value specified by the relevant standard such as the RISC ISA. But if instead an *arithmetic* operation is performed on the result of the wrong-width sign injection operation, then it is just required that the result is some form of NaN (the canonical NaN in the case of RISC-V). Load, store, move and sign-injection operations perform no interpretation. Whereas for the other arithmetic operations on the other hand, they do perform an interpretation, but since only a mantissa bit is "wrong" compared to the target value it is not important in the sense that the interpretation to any arithmetic logic is still a NaN in both cases (assuming one doesn't care about the kind of NaN which RISC-V floating point arithmetic doesn't require).

As a further note regarding embodiments of solution (a), if a normalized-format register 114 supports three different-width formats, then the denormalization logic 126 will need to ignore two sign bits when detecting the NaN-boxing of a first, narrower format value: both the MSB of the second, wider format, and the MSB of the third, even-wider format. E.g. where a F32 sign injection may be performed on a 64-bit NaN-boxed F16_norm, then the denormalization logic 126 needs to ignore both sign bits for NaN-box detection, since there could also have been an additional F64 sign injection. Similarly if the registers support four formats, there will be four bits to ignore, etc.

**Scenario iv)** Solution (a) also works for scenario iv), i.e. the case where a sign injection operation designed for a wider format is performed on a +ve NaN in the wider format, converting it into a NaN-boxed value in a narrower format. For example, consider a 32-bit source number in the unnormalized FP32 format of value:

0_11111111_111111xxxxxxxxxxxxxxxxx

where "x" represents any bit-value (0 or 1). When placed into the Fnorm register, this is normalized. The result is a 33-bit F32_norm +ve NaN (or more generally a +ve NaN in the wider format): i.e. sign bit = 0, then the exponent all 1s, then the mantissa could have all 1s or any combination with the top six bits of the mantissa being 1. That is, for the example given:

0_**1**11111111_111111xxxxxxxxxxxxxxxxx

where the bold shows the bit that is added by the normalization. The issue is that a sign injection would then change the MSB to 1, which now makes the value look like a NaN-boxed 17-bit Fnorm_16.

1_111111111_111111xxxxxxxxxxxxxxxxx (in Fnorm_32)

= 1111111111111111_x_xxxxx_xxxxxxxxxx (in NaN-boxed Fnorm_16)

To generalize, the issue is that in Fn_norm, there could be a value with sign bit = 0 (a +ve value), exponent bits all 1 (indicating an exceptional value), and the mantissa field having enough of its most-significant bits as 1 such that if the sign bit is flipped by an n-bit format sign-injection operation, then the top n/2 bits will all be 1 and so it looks like a NaN-boxed F(n/2)_norm.

Note that this scenario only occurs for some values, if the mantissa of the NaN has at least a certain number of its left-most bits as 1s (or more generally, if a different encoding of NaN-boxing is used, if the sign injection would cause the encoding in the top N/2 bits or the relevant portion thereof to now equal the encoding of NaN-boxing where it did not before the sign injection). E.g. for a single precision input, the starting Fnorm pattern would be 0, then nine 1s to indicate an exceptional value, then any non-zero mantissa to indicate a NaN. So even after the MSB sign bit gets changed to 1 by the sign injection, only some possible values of the NaN mantissa would end up with the 16 MSBs as all 1s. In the case that the sign change causes a +ve NaN to become a -ve NaN or vice-versa, but not NaN-boxed/un-NaN-boxed, then only flipping the sign bit is ok.

Nonetheless, as scenario iv) can occur for at least some values of NaN, then it needs to be addressed if the processor 100 is to be RISC-V compliant or the like, since to be compliant there must be no situation in which a sign-injection gives a non-standard or unpredictable result.

Solution (a) will also work as a solution for this scenario. I.e. if we ignore the sign for NaN-boxing, the "wider NaN" would be normalised in the narrower format when coming in (vs denormalised in narrower format when going out as in case iii). That is to say, while conventionally a NaN would be detected based on all the top bits being high (all the NaN-boxing or "padding" bits being high, i.e. all the top n/2 bits), in embodiments a NaN may be detected if all the top bits but the MSB are high; and this detection can be applied at the time of normalizing incoming values being stored into a register in order to deal with scenario iv), as well as when denormalizing values being read out of registers to deal with scenario iii) as discussed earlier. In other words, the normalization circuitry 124 may be configured to ignore the sign bit of the *unnormalized* (e.g. standard) *Fn* value at the time of moving in the value into one of the Fnorm registers 114, before any sign injection operation ins performed, in anticipation that one might be performed later. When denormalizing again, including after any sign injection, then the denormalization circuity 126 also ignores the MSB when determining whether NaN-boxed.

By way of example, consider again the 32-bit source number in the unnormalized FP32 format of value:
0_11111111_111111xxxxxxxxxxxxxxxxx

According to solution a), when this is normalized upon being placed into an Fnorm register, the normalization ignores the most significant bit when determining whether the unnormalized source value NaN-boxed. So the normalization process sees the value as a NaN-boxed F16:
X111111111111111_x_xxxxx_xxxxxxxxxx

where X represents the ignored bit. The normalization process of solution a) thus normalizes the source value as if it was a NaN-boxed F16 (or more generally normalizes the source value as if it was a NaN-boxed in the unnormalized narrower format:

X111111111111111_y_yyyyyy_yyyyyyyyyy

where y represent the normalized bits, of whatever value results from the denormalization. The result is the same as a 33-bit F32_norm +ve NaN (or more generally a +ve NaN in the wider format): i.e. sign bit = 0, then the exponent all 1s, then the mantissa could have all 1s or any combination with the top six bits of the mantissa being 1. That is, for the example given:

0_111111111_111111yyyyyyyyyyyyyyyyyy

If a wider-format (in this case 32-bit) sign injection operation is performed on the normalized value, then it flips the MSB in the wide format, so the value becomes:

1_111111111_111111yyyyyyyyyyyyyyyyyy

However the denormalization will ignore the MSB anyway when determining whether NaN-boxed. So the denormalization will see the value as follows regardless of whether a wider-format sign injection was performed or not:

X111111111111111_y_yyyyyy_yyyyyyyyyy

and denormalize accordingly into:

X111111111111111_x_xxxxx_xxxxxxxxxx

This can also be described as the original unnormalized source value with a sign change:

1_11111111_111111xxxxxxxxxxxxxxxxxx

Thus the compliant result is obtained regardless of the normalization, sign change and then denormalization.

To recap: the original problem, without the disclosed solution, was that a sign change causes a value that was normalised in a narrower format to be denormalised in a wider format (for case iii) or a value that was normalised in a wider format to be denormalised in a narrower format (for case iv). By ignoring the sign when doing NaN-box detection, just for the purpose of normalization and denormalization, that problem does not occur (though note that to be RISC-V compliant, the sign can't be ignored for NaN-box detection when doing arithmetic). Thus case iii) will normalize and denormalize in the narrower format, and case iv) will normalize and denormalize in the wider format. Note that the sign is ignored for both normalisation and denormalisation for this solution. So while the value is already normalised before the sign-injection instruction, nonetheless the normalization also already ignored the sign, so potential sign-changes don't influence denormalization. E.g. for scenario iv), the normalization circuitry 124 normalizes as a NaN-boxed narrower value before the sign-injection instruction even if the sign was positive at that point, and the denormalization circuitry 126 will also renormalize as a NaN-boxed narrower value regardless of the sign bit.

Thus taking solution (a) for scenarios iii) and iv) together, whilst conventionally one would normalise and denormalize in the narrower format if all NaN-boxing bits are high, and hence normalise in the wider format if all NaN-boxing bits except the sign bit are high, embodiments disclosed herein now also normalize and denormalize in the narrower format if all such bits are high except the sign, hence effectively ignoring the sign.

The MSB could also be ignored for the purpose of NaN-box detection in scenarios i) and v), but there is no need to do so.

### D.4. Solution (b): Denormalize then Renormalize - Suitable for any scenario, including for scenario ii).

Solution (a) will not work for scenario ii), as shown below. Instead an alternative solution, referred to herein as solution (b), is to denormalize the source value at the time of performing the sign injection operation, perform the sign injection on the de-normalized version of the value, and then re-normalize again after, all as part of the sign injection operation. E.g. all this may be done as part of executing a single sign injection instruction.

**Scenario ii)** Consider a narrower sign injection operation performed on a wider, subnormal value, e.g. a 16-bit sign injection operation on a 32-bit value stored as a 33-bit Fnorm. Without any special measure being taken, the narrower sign injection will change a mantissa bit in the wider format, which means that for normalized subnormal values, the number will have the wrong value when normalized again. This issue only occurs for subnormal (denormal) values because only for subnormals are the mantissa bits shifted.

For instance consider a denormal F32 source value, e.g.:

0_00000000_00011111111111111111111

In this case, an FSGN.H operation (half precision sign-injection operation) that changes the sign bit (of a 16-bit number) should give, in the unnormalized domain:

0_00000000_000111110111111111111111

where the bold here represents the changed bit. The value is still a denormal (subnormal) but a mantissa bit has changed. This is the result specified by the standard. Again this doesn't necessarily have to be meaningful or useful, just predictable.

However, if the above source value is instead placed in a normalized format register 114, re-coded in a normalized F32_norm format (exponent 1-bit extended, bias adjusted by +128, exponent adjusted by -4 for normalising, mantissa shifted left 4 for normalising) then it is represented as:
0_001111100_11111111111111111110000

If a sign injection operation were to then change the sign bit (which changes a mantissa bit which has shifted because of normalising), this would give:
0_001111100_1111111**0**111111111110000

Then when the de-normalization logic 126 denormalizes this (e.g. upon a store or move operation), then without any further measures being put in place, this would give:
0_00000000_00011111111**0**11111111111

What has happened is that the shifting of the mantissa in case of normalising denormals causes the wrong bit to change. Note that the amount of shifting is dependent on the denormal, so one can't just change the bit at the bold position, for example. An refinement to this solution would be to determine where the original bold position ends up in the normalised form based on the exponent. That is the optimisation of case ii) described below.

**Solution (b):** The previous solution, solution (a), won't help with this case. Instead, a solution that will always work is to denormalise, then change the sign bit, and then renormalise.

Start re-coded:
0 001111100_1111111111111111110000

Then denormalise:
0_00000000_000111111111111111111111

Then change sign bit (in the unnormalized/denormalized domain):
0_00000000_00011110111111111111111

Then re-normalise:
0 001111100_1110111111111111110000

This gives the desired, target result.

Table 4: Solution (b) for scenario ii), narrower operation on wider value

| Type | Input | Output | Comment |
|---|---|---|---|
| Narrower operation | Wider | Changed bit (in mantissa) | In this case the sign bit in the narrower format (e.g. bit 15 for F16) is a bit in the mantissa of the wider format (e.g. F32). Since these mantissa bits differ between F32 and F32_norm in case of subnormal numbers, we first have to de-normalize the F32_norm to F32, change the corresponding bit, and renormalize the F32 again into a F32_norm. |

Whereas in solution (a), the special measure (ignore MSB for NaN-box detection) is done at time of denormalization, in contrast in solution (b) everything is done at the time of the sign injection operation. E.g. the de-normalizing, sign bit flip, and re-normalizing, may all be done as an inherent effect of executing a sign-injection instruction. The bit flip is done by the FPU 122, and the de-normalization and re-normalization are done by the denormalization and normalization logic 126, 124 respectively, triggered by the FPU 122 as part of the sign injection operation (before and after, respectively, the actual flipping of the bit). The denormalization and normalization logic 126, 124 (or an instance thereof) could be part of the FPU 122, or could be separate but used by the FPU 122 to perform the operation.

An advantage of solution (b) is that it will work for any scenario. A downside is that it incurs some complexity, especially if each denormalization and renormalization is done as a full, "brute force" denormalization/normalization (though some optimizations are disclosed below to mitigate this). Nonetheless, solution (b) could be used or all scenarios, including for scenarios iii) and iv) as well as scenario ii). This may be desirable in order to simplify the overall design by using a universal solution for all scenarios. E.g. with more than two formats it becomes even more complicated to track everything and this generic solution is always okay.

Alternatively the FPU 122 could be provided with detection logic configured to detect the scenario and adapt which solution (if any) to apply accordingly, e.g. to apply solution (a) for scenario iii) and solution (b) for scenario ii. Solution (a) or (b) could be used for scenario iv).

Neither of solution (a) nor (b) is required for scenarios i) and v), but solution (b) could be applied anyway, e.g. to avoid having to design a processor 100 which detects the scenario, and instead allow a design which applies single universal solution for all sign injection operations performed on normalized values. Alternatively the processor 100 could comprise logic 100 which detects scenarios i) and v) and avoids applying the de-normalize & renormalize steps of solution (b) in those scenarios. That would give a faster sign injection for scenarios i) and v), at the expense of some additional detection logic.

In principle solution (a) could also be used on its own without solution (b), if the designer decides they can live with unpredictable or non-canonical results for scenario ii). However that would give a processor that is not RISC-V compliant with respect to scenario ii).

**D5. Solution (b) Optimizations**

In embodiments the FPU 122 may comprise hardware detection logic (circuitry) configured to detect which scenario is found in the source register 114 to which it is applying a sign injection, and to adapt which solution is applied depending on the detected scenario. In this case, because the FPU 122 can detect which scenario it is facing (e.g. ii, narrow op on wider value, or iii, wider on narrower), and because it can be determined in advance how the bits get transformed for a given specific scenario; then a special bespoke, reduced-complexity transform can be applied tailored to the detected scenario instead of doing a full-complexity, "brute force" de-normalization and re-normalization.

For case iii) and iv) the denormalization or renormalization is "trivial" because we know in advance we have a NaN and how it transforms. The remaining case of ii), narrow operation on wider format is somewhat more complex, but an optimization can still be found.

**D.5.1 - Scenario iii) optimization**

Consider again a scenario where iii) a wider sign injection operation is performed on a narrower, NaN-boxed value. E.g. a 32-bit sign injection operation is performed on a 17-bit F16_norm value NaN-boxed up to 33-bits; or a 64-bit sign injection operation is performed on a NaN-boxed F16_norm or NaN-boxed F32-norm. The issue is that the sign injection will change the NaN-boxing, which in turn will affect how the value gets denormalized if no measures are taken to address this. For instance, see again the example discussed under subsection D.3.

For scenario iii) ignoring the sign-bit for NaN-boxing works, but for scenario ii) it doesn't. Solution (b) on the other hand - denormalizing, changing sign and then normalizing - always works for all scenarios including ii) and iii). Given that logic may be provided anyway for denormalizing, changing sign and re-normalizing, in order to provide solution (b) for scenario ii), then it may as well be used for scenario iii) as well.

An optimization of solution (b) for scenario iii) is as follows. Upon executing a wider-format sign injection operation on a NaN-boxed narrower source value, the FPU 122 uses the denormalization logic 126 to perform a full denormalization of the narrower format, and then changes sign, as in the unoptimized solution. However, as the wider format is a NaN and hence for sure not a denormal, re-normalizing is trivial: just adding an exponent bit. i.e. for FP16 the exponent was 11111 and now becomes 111111 (or the appropriate encoding according to the Fnorm encoding scheme). Therefore for this case, the normalization logic 124 may be configured to re-normalize by simply adding the extra exponent bit rather than performing a full-complexity, "brute force" re-normalization. The detection logic of the FPU 122 is configured to detect the relevant scenario and trigger the normalization logic 124 to perform the normalization logic 124 to perform the renormalization in this reduced-complexity manner when scenario iii) is detected.

Table 5: optimization of solution (b) for scenario iii).

| Type | Input | Output | Comment |
|---|---|---|---|
| Wider operation | NaN-boxed narrower | NaN (change from NaN-boxed to NaN) | This will now no longer be a NaN-boxed number, i.e. in Fn it will be a regular NaN. Since the bits must exactly match when moving out such a regular NaN, we first detect the normalised form of the value from the FPR from the NaN-boxing (e.g. say a BF16_norm), denormalise (e.g. into BF16), NaN-box into a F64, change the F64 sign, and re-normalise as a F64_norm. The renormalization can be implemented by just adding an extra exponent bit. |

Case ii) means denormalizing a wider input and normalizing a narrower output. Whereas case iii) means denormalizing a narrower input and normalizing a wider output. So one could get away with not needing to denormalize the narrowest input here if using solution (a). However, it is identified above that normalizing a wider output can be implemented in a manner incurring only trivial complexity. Solution (a) would move this normalization of the narrower input out of the sign-injection operation and into a move or store operation. So solution (a) would incur a similar cost and still wouldn't allow all sign injections to just be a bit flip because of case ii). Hence the universal solution (b) is cleaner.

**D.5.2 - Scenario iv) optimization**

Consider again the case where iv) a sign injection operation designed for a wider format is performed on a +ve NaN in the wider format, converting it into a NaN-boxed value in a narrower format. For example, the source value in the Fnorm register could be, say, a 33-bit F32_norm +ve NaN: i.e. sign bit = 0, then the exponent all 1s, then the mantissa could have all 1s or any combination with the top six bits of the mantissa being 1. See again the explanation under heading D.3.

Solution (b) will also work since solution (b) works for all scenarios.

An optimisation of solution (b) for scenario iv) is the following. For a wider operation on a NaN, then becoming a NaN-boxed narrower, as in scenario iv), it is the other way around than in scenario iii): denormalising is trivial as the source value is a NaN on thus not a denormal, and then we normalise the resulting NaN-boxed value. So for scenario iv), a wider-format sign injection performed on a NaN, causing it to become a NaN-boxed narrower value, the FPU 122 may be configured to use the denormalization logic 126 to perform a reduced-complexity denormalization of just removing an exponent bit (the equivalent change of going from the encoded NaN to an encoded NaN-boxed in case of using the Fnorm encoding scheme). The FPU 122 then changes the sign bit, and then uses the normalization logic 124 to perform a full-complexity renormalization. Note that the encoding scheme case detection also becomes easier.

Table 6: optimization of solution (b) for scenario iv).

| Type | Input | Output | Comment |
|---|---|---|---|
| Wider operation | NaN | NaN-boxed narrower (change from NaN to NaN-boxed) | Here we had normalised as the wider format but it was nearly NaN-boxed (i.e. only the sign bit was low). Changing the sign causes it to be NaN-boxed and hence we should denormalise the e.g. F32_norm to F32, change the sign bit so it is a NaN-boxed e.g. F16, and then normalise as F16_norm. As the source value is a NaN, the denormalizing can be implemented with a trivial complexity. |

So in the cases of scenarios iii) and iv), we either have to just change a bit and only do a full-complexity denormalization, or only a full-complexity normalization, and never both a full denormalization and re-normalization which is somewhat costly.

In other words, with the optimization, then in scenario iii) the re-normalization does not require a full-complexity "brute force" renormalization; but rather because in embodiments the FPU 122 can detect what scenario it is encountering and we have worked out in advance what transformation the combination of sign injection and Fnorm has caused, then the normalization logic 124 can be configured to do a special, optimized, low-complexity renormalization. And conversely in scenario iv), it is not necessary to do a full-complexity, "brute force" denormalization, but instead the normalization logic 122 can be configured to do an optimized, simplified version of the denormalization.

The relevant logic 122/124/126 either just flips a bit (case i), or performs full-complexity denormalization followed by trivial-complexity normalisation (case ii), or performs trivial-complexity denormalization followed by full-complexity normalisation (case iv). Hence these can be parallelised and made relatively fast, i.e. we never have to pay the delay of full denormalization followed by full normalisation that solution (b) initially seems to suggest (the processor still has to do both normalization and renormalization but one of them, depending on the scenario, can be implemented in a manner that is trivial in terms of complexity). That just leaves still case ii) to optimise to be faster.

**D.5.3 - Scenario ii) optimization**

Consider again the scenario of: ii) a narrower sign injection operation performed on a wider value, e.g. a 16-bit sign injection operation performed on a 32-bit value stored as a 33-bit F32_norm. The issue here is that the sign injection operation changes a bit in the mantissa of the wider source value. For instance see again the example given earlier under heading D.4.

Again, because in embodiments the FPU 122 can detect which scenario it is encountering (in this case ii, narrower op on wider value), and because it can be predetermined in advance how the bits get transformed for this specific scenario; then the FPU 122 (and normalization/denormalization logic 124, 126) can be configured to apply a special bespoke transform tailored to this scenario instead of doing a full-complexity, "brute force" de-normalization and re-normalization.

For case iii) and iv) the denormalization or renormalization is "trivial" because we know in advance we have a NaN and how it transforms. However the remaining case of ii), narrower operation on wider format, is somewhat more complex.

For a narrower sign injection changing the mantissa of a wider format we can derive from the extended exponent which bit to change. To do this, there are three points to note. The first is that normalisation of subnormals always means shifting the mantissa left. The second point is that there are a limited amount of places where the sign change could happen. For the example of F32/F32_norm, that is from bit 15 in a FSGN.H operation to the mantissa width of bit 23. The third point is that this sign change could become the implicit high bit, or remove the implicit high bit.

To elaborate, continuing the example above, the extended exponent was -131 vs -127 for the denormal, so instead of bit 15 of the mantissa we need to change bit 19. Since the mantissa of an FP32 is 23 bits this extend up to extended exponent -134 and we can create a bit-mask to change bit 15 to bit 23 of the mantissa. This generalises to extended exponent -bias to -bias-(mantissa_bitwidth - sign_inject_bit), and in our case this can be the combinations of mantissa_bitwidths of 52 and 23 (F64 and F32) and sign-inject bit of 31 and 15 (F32 and BF16/F16), so masks of 52-31, 52-15, 23-15.

For a narrower sign injection changing the mantissa of a wider format for an even smaller denormal, the normalisation changes.

In the previous case (a narrower sign injection changing the mantissa of a wider format) the assumption was that there was a high bit between bit 15 and bit 23, so that changing bit 15 could never change the implicit high bit in normalised form and hence the exponent is already correct and the sign change means changing a bit between bit 15 and 23 depending on how much the mantissa has shifted up for normalisation. That can be done with a mask.

However, for the case of a narrower sign injection changing the mantissa of a wider format for an even smaller denormal, then since we have shifted more for normalisation we know that all bits between 15 and 23 in unnormalised form were zero. Hence if changing the sign bit 15 to 1, this has to become the implicit high bit in normalised form. As it is a known position we know the corresponding exponent value (but we do need to shift the mantissa right to correct).

So in this case the bit to change always start as low (because it was a highly shifted denormal) and we change it to high (otherwise nothing changes, in the sense that if the bit was already low, and the sign change also makes it low, it is the same and the sign change does nothing).

For example, consider denormal F32, e.g.:
0_00000000_00000000000111111111111

And then an FSGN.H operation that changes the sign bit (of a 16-bit number) gives:
0_00000000_00000001000111111111111

And hence this is a larger denormal number (the sign change becomes the denormals msb).

If we store this re-coded we have (exponent 1-bit extended, bias adjusted by +128, exponent adjusted by -12 for normalising, mantissa shifted left 12 for normalising):
0_001110100_11111111111000000000000

Change sign (make exponent -127-8 as bit 15 is now msb, shift mantissa right by the difference which is +4):
0_001111000_00011111111111100000000

Denormalise:
0_00000000_00000001000111111111111

Note that in this case we need to shift the mantissa right up to the sign location's amount of places, so up to 31 or up to 15 places (if we start from a normalised form and assume the original high bit of the denormal in un-normalised form was at a lower position than the sign bit, that means that for e.g. F32 it could have been at bit index 14 down to 0 - hence introducing a high bit a bit index 15 because of the sign injection means correcting the normalisation by shifting down of up to 15 places). But because the injected high bit is always at position 31 or 15, the resulting exponent is fixed and known beforehand (-127-8 for (B)F16 in F32, -1023-8 for (B)F16 in F64, -1023-21 for F32 in F64). And because the amount of places to shift right is the difference of the old exponent and the new resulting exponent which is known beforehand, this is a cheap difference with a constant.

So in the case where the mantissa is changed, we either have a restricted mask with a shift to change the right bit, or a shifted mantissa with a fixed and known exponent, instead of the whole denormalise/normalise cycle.

There is a further case to consider where bit 15 is high and becomes the implicit high bit in normalised form. Then if the sign injection operation turns this bit low, we need to leading zero count bit 15 down to 0 and adjust the exponent by that amount and shift the mantissa left by that amount. Since this is only the case for one specific exponent value (e.g. -127-8 for F16 in F32) this is again with respect to a constant and with a limited shift range, which makes these operations relatively cheap. All these three cases can be parallelised and detected from the exponent.

Further mathematical detail is given below.

For case ii) the number in denormalised form is a subnormal, and the sign-injection changes a bit of the subnormal's mantissa. In the normalised form the bit that is manipulated is shifted from it's denormalised position. A general solution is thus to denormalise, which shifts the mantissa to the original positions, change the bit, and renormalise. Note that because of the mantissa bit change the renormalisation may be different then before. This is because a subnormal has no implicit high msb, so depending on where the explicit high msb of the subnormal is, we either change a bit below the high msb which means normalisation is by the same shift as before or we change which bit is the high msb, which means the normalisation performs a different shift. We can optimise this process depending on which situation we are in.

**D.5.3.1. Subnormal leading bit is more significant than changed mantissa bit at the sign-injection position**

In this case the leading high bit is unchanged and denormalisation followed by renormalisation ends up with the same exponent and the same mantissa shift, e.g. in denormalised form:

0_00000000_0010000s000000000000000

with s the sign bit to be injected.

So the leading high bit was in the range [mw - 1: i] in the original denormalised form, where i is the width of the narrower format in which the sign-injection operation is performed and mw is the mantissa-width of the wider format. For example in the range [23 - 1: 16] for FP16 sign-injection in FP32_norm, [52 - 1: 32] for FP32 sign injection in FP64_norm, or [52 - 1: 16] for FP16 sign injection in FP64_norm.

The mantissa shift is therefore a maximum of $mw$ - i, e.g. 23 - 16 = 7, 52 - 32 = 20, or 52 - 16 = 36 in the examples. In these cases the sign-injection bit s at index $i$ - 1 also shifts upwards by that amount in the normalised form.

The exponent in the normalised form contains how much the mantissa has been shifted upwards:

$$shift = |exp' - bias' + (bias - 1)|$$

Thus, to change the correct sign bit, we need to shift *mant'* down by *shift,* change the *i*th bit, and shift *mant'* back up by *shift.* This can be optimised by creating a mask with value $(1 \cdot 2^{(shift-1)})$ for bit index mw - 1 to $i$ of mant' in order to manipulate bit s at the right position in mant'.

**D.5.3.2. Subnormal leading bit is less significant than the changed mantissa bit at the sign-injection position**

In this case the changed mantissa bit at the sign-injection position could become the new leading high bit, and hence would be re-normalised as such, e.g. in denormalised form:

0_00000000_0000000s000010000000000

with s the sign bit which would become the leading high bit if a 1 is injected.

This means the new exponent after renormalisation becomes $exp'' = -(bias - 1) - (mw - i) + bias'$, and the new mantissa after renormalisation becomes $mant'' = mant' \cdot 2^{exp'-bias'+(bias-1)+(mw-i)}$ if s is 1, otherwise nothing changes.

Because the leading high bit was at a bit index less than $i$ - 1 in denormalised form, the maximum shift right of *mant'* is $i$ - 1.

**D.5.3.3. Subnormal leading bit is at the sign-injection position**

In this case the changed mantissa bit at the sign-injection position could clear the leading high bit and the new leading high bit will be less significant or the mantissa will become zero, e.g. in denormalised form:

0_00000000_0000000s000010000000000

with s the sign bit which could clear the leading high bit if a 0 is injected.

This means the new exponent after renormalisation becomes $exp'' = -(bias - 1) - (mw - i) - lzc(mant') + bias'$ (or $exp'' = 0$ if $mant' = 0$), and the new mantissa after renormalisation becomes mant'' = mant' $\cdot 2^{-1-lzc(mant')}$ (or $mant'' = 0$ if $mant'$ = 0) if s is 0, otherwise nothing changes.

Because the leading high bit was at a bit index less than $i$ - 1 in denormalised form, the maximum shift left of mant' is $i$ - 1.

So in summary:

$$exp''$$
$$= \begin{cases} exp' & \text{if } |exp' - bias' + (bias - 1)| < (mw - i) \\ -(bias - 1) - (mw - i) + bias' & \text{if } |exp' - bias' + (bias - 1)| > (mw - i) \land s = 1 \\ 0 & \text{if } |exp' - bias' + (bias - 1)| = (mw - i) \land s = 0 \land lzc(mant') \geq i \\ -(bias - 1) - (mw - i) - lzc(mant') + bias' & \text{if } |exp' - bias' + (bias - 1)| = (mw - i) \land s = 0 \land lzc(mant') < i \\ exp' & \text{otherwise} \end{cases}$$

and

$mant''$

$$= \begin{cases} mant'[mw - 1 : i]op(1 \cdot 2^{|exp'-bias|}), mant'[i - 1:0] & \text{if } |exp' - bias' + (bias - 1)| < (mw - i) \\ mant' \cdot 2^{exp'-bias'+(bias-1)+(mw-i)} & \text{if } |exp' - bias' + (bias - 1)| > (mw - i) \wedge s = 1 \\ 0 & \text{if } |exp' - bias' + (bias - 1)| = (mw - i) \wedge s = 0 \wedge \mathrm{lzc}(mant') \geq i \\ mant' \cdot 2^{-1-\mathrm{lzc}(mant')} & \text{if } |exp' - bias' + (bias - 1)| = (mw - i) \wedge s = 0 \wedge \mathrm{lzc}(mant') < i \\ mant' & \text{otherwise} \end{cases}$$

Note that in such embodiments, the denormalization, sign injection and renormalization are performed in a fused manner (i.e. in a synergistic combined manner). It will be appreciated that the illustration of the FPU 122, normalization logic 124 and denormalization logic 126 shown in Figure 1 may be somewhat schematic compared to the actual implementation, and these do not necessarily represent completely separate pieces of hardware. The logic of two or all three of these schematised or conceptual hardware units 122, 124, 126 used to process some or all of the scenarios dealt with herein may in practice be fused (combined) in order to perform the denormalization, sign injection and renormalization together in a synergistic manner that includes one or more combined operations. This comment could apply to others of the solutions dealing with others of the scenarios disclosed herein, not just the optimization D5 for scenario ii). More generally the normalization logic 124, the denormalization logic 126, and the FPU or floating point logic 122, may be described together as logic circuitry for performing the denormalization, sign injection and renormalization as separate or fused steps.

## D6. Recap

The disclosed solutions are:

- Solution (a): ignore the MSB when determining whether NaN-boxed
- Solution (b): de-normalize, inject sign, then renormalize

On top of solution (b) there are also a number of possible optimisations to avoid needing to perform a full-complexity denomalise/normalise for every sign-injection operation.

The scenarios to which these solutions may be applied are as follows.

Table 7: summary of sign injection scenarios.

| | |
|---|---|
| i) Narrower on narrower | No problem |
| ii) Narrower on wider number | Use solution (b), with optional optimization so as not to require a full "brute force" normalization/renormalization. |
| iii) Wider on narrower number | Could use solution (a) or solution (b). Solution (b) may be applied with optional optimization so as not to require a full "brute force" renormalization. |
| iv) Wider on wider NaN | Could solution (a) or (b). Solution (b) may be applied with optional optimization so as not to require a full "brute force" de-normalization. |
| v) Wider on wider | No problem |

## E. Further Remarks

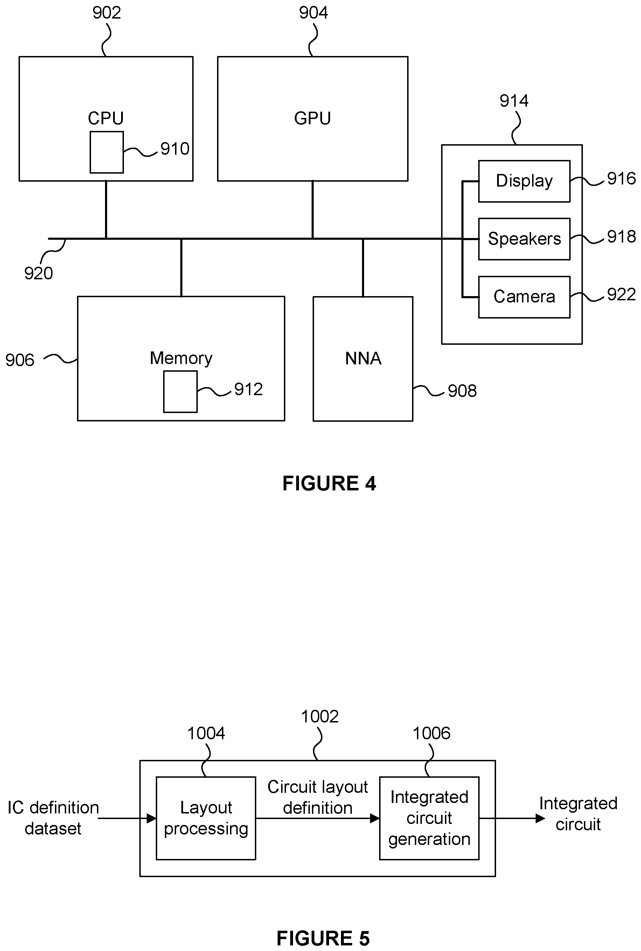

Figure 4 shows a computer system in which processing systems described herein may be implemented. The computer system comprises a CPU 902, a GPU 904, a memory 906, a neural network accelerator (NNA) 908 and other devices 914, such as a display 916, speakers 918 and a camera 922. A processing block 910 (corresponding to processing block 150) is implemented on the CPU 902. In other examples, one or more of the depicted components may be omitted from the system, and/or the processing block 910 may be implemented on the GPU 904 or within the NNA 908. The components of the computer system can communicate with each other via a communications bus 920.

The processor and computing system of Figures 1 to 4 are shown as comprising a number of functional blocks. This is schematic only and is not intended to define a strict division between different logic elements of such entities. Each functional block may be provided in any suitable manner. It is to be understood that intermediate values described herein as being formed by a processor need not be physically generated by the processor at any point and may merely represent logical values which conveniently describe the processing performed by the processor between its input and output.

The processors described herein may be embodied in hardware on an integrated circuit. The processors described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processor configured to perform any of the methods described herein, or to manufacture a processor comprising any apparatus described herein. An integrated circuit definition dataset may be, for example, an integrated circuit description.

Therefore, there may be provided a method of manufacturing, at an integrated circuit manufacturing system, a processor as described herein. Furthermore, there may be provided an integrated circuit definition dataset that, when processed in an integrated circuit manufacturing system, causes the method of manufacturing a processor to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processor will now be described with respect to Figure 5.

Figure 5 shows an example of an integrated circuit (IC) manufacturing system 1002 which is configured to manufacture a processor as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a processor as described in any of the examples herein), process the IC definition dataset, and generate an IC according to the IC definition dataset (e.g. which embodies a processor as described in any of the examples herein). The processing of the IC definition dataset configures the IC manufacturing system 1002 to manufacture an integrated circuit embodying a processor as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processor without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 5 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 5, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

It will be appreciated that the various embodiments described above have been disclosed only be way of example. More generally, according to a first aspect disclosed herein there may be provided a processor, method, program, data set or system in accordance with any of the following statements.

A1. A processor comprising: normalization circuitry configured to re-encode each of a plurality of values from an unnormalized wider floating point format to a normalized wider floating point format, and to re-encode each of a plurality of values from an unnormalized narrower floating point format to a normalized narrower floating point format; normalized-format registers each at least as wide as the normalized wider floating point format, each thus able to hold a value in the normalized wider floating point format and, at another time, a NaN-boxed value in the normalized narrower floating point format, floating point logic circuitry operable to perform floating point operations on values held in specified ones of the normalized-format floating point registers; wherein the floating point operations include a wider-format sign injection operation and a narrower-format sign injection operation, the floating point logic circuitry being configured so as, at least when performing the wider-format sign injection operation on a NaN-boxed value of the normalized narrower floating point format held in a respective source register of the normalized-format registers, to perform a bit manipulation on a bit in the respective source register at a most-significant bit-position of the normalized wider floating point format; and the processor further comprises denormalization circuitry arranged to de-normalize values from the normalized-format registers, wherein the denormalization circuitry is configured so as, at least when de-normalizing the NaN-boxed value of the normalized narrower floating point format from the respective source register, to ignore the bit at the most-significant bit-position of the normalized wider floating point format when detecting NaN-boxing, and thus denormalize the NaN-boxed value into the unnormalized narrower floating point format.

A2. The processor of statement A1, wherein the floating point logic circuit comprises a floating point unit, FPU, configured to perform the wider format sign injection operation in response to executing a single instance of a wider-format sign-injection machine code instruction type, and to perform the narrower format sign injection operation in response to executing a single instance of a narrower-format sign-injection machine code instruction type.

A3. The processor of statement A1 or A2, wherein the denormalization circuitry is configured to perform the denormalization of each value when storing the value to a memory address or moving the value to an unnormalized-format register.

A4. The processor of statement A3, wherein the denormalization circuitry is configured to perform each denormalization in response to execution of a single instance of a store or move instruction type.

A5. The processor of any of statements A1 to A4, wherein the normalization circuitry configured to perform the normalization of each value when loading from a memory address or moving the value from an unnormalized-format register.

A6. The processor of statement A5, wherein the normalization circuitry is configured to perform each normalization in response to execution of a single instance of a load or move instruction type.

A7. The processor of any of statements A1 to A6, wherein the unnormalized wider floating point format is an n-bit format and the unnormalized narrower floating point format is an n/2-bit format.

A8. The processor of any of statements A1 to A7, wherein the unnormalized narrower floating point format has $e\_1$ exponent bits and the normalized narrower floating point format has $e\_1+1$ exponent bits, and the unnormalized wider floating point format has $e\_2$ exponent bits and the normalized wider floating point format has $e\_2+1$ exponent bits, where $e\_2 > e\_1$.

A9. The processor of any of statements A1 to A8, wherein the unnormalized and normalized narrower floating point formats each have $m\_1$ mantissa bits, and the unnormalized and the normalized wider floating point formats each has $m\_2$ mantissa bits, where $m\_2 > m\_1$.

A10. The processor of any of statements A1 to A9, wherein the floating point logic circuitry is configured so as if performing an arithmetic operation on the NaN-boxed value in the respective source register after the wider-format sign injection operation has been performed thereon, to output a result of NaN.

A11. The processor of any of statements A1 to A10, wherein the floating point logic circuitry comprises detection logic configured to detect a sign injection scenario, wherein the sign injection scenario can be at least either of:

the wider-format sign injection operation being performed on the NaN-boxed value of the normalized narrower floating point format as in statement A1, or

the narrower-format sign injection operation being performed on a source value held in a respective source register of the normalized-format requested in the normalized wider floating point format;

wherein the floating point logic circuitry is configured so as, when the detection logic detects the latter scenario, to perform the narrower-format sign injection operation by de-normalizing the source value to the unnormalized narrower floating point format, then performing the bit manipulation on a sign bit of the source value in the unnormalized narrower floating point format, then re-normalizing the source value back to the normalized narrower floating point format.

A12. The processor of any of statements A1 to A11, wherein: the normalization circuitry is configured to receive a plurality of input values and identify each as being either one of the values in the unnormalized wider floating point format or one of the values in the unnormalized narrower floating point format, and perform the re-encoding accordingly, wherein the identification of each input value is based on a determination as to whether the input value is NaN-boxed; and the normalization circuitry is configured to ignore a most significant bit of each value input when performing said determination of whether NaN-boxed.

A13. The processor of any of statements A1 to A12, wherein: the floating point logic circuitry is further configured so as when performing the wider-format sign injection operation on a respective source value that is a positive NaN in the normalized wider floating point format, to perform the bit manipulation on a bit in the respective source register at the most-significant bit-position of the normalized wider floating point format; and the denormalization circuitry is configured so as, when de-normalizing the positive NaN of the normalized wider floating point format from the respective source register, at least in a scenario where the wider-format sign injection would otherwise cause the respective source value to become a NaN-boxed value in the normalized narrower floating point format, to ignore the bit at the most-significant bit-position of the normalized wider floating point format when detecting NaN-boxing, and thus denormalize the respective source value as if a NaN-boxed value in the normalized narrower floating point format.

A14. The processor of any of statements A1 to A13, wherein each of the normalized wider floating point format and the normalized narrower floating point format comprises an exponent field of a respective number of exponent bits, and: the floating point logic circuitry is operable to perform a floating point operation combining normal and subnormal values, the floating point logic circuitry being configured to perform the floating point operation on the normal and subnormal values as re-encoded in the normalized wider floating point format or the normalized narrower floating point format; wherein the floating point logic circuitry is further able to operate on one or more exceptional values, being configured to operate on each exceptional value represented in the normalized wider floating point format or normalized narrower floating point format; and wherein each of the normalized wider floating point format and the normalized narrower floating point format employs a subset of the respective number of exponent bits to encode a predetermined indication of being an exceptional value for each exceptional value, the subset being a plurality of bits but fewer bits than the respective number of exponent bits, wherein a combination of bit values used to encode said predetermined indication does not occur within a range of the exponent field used to represent any possible non-exceptional, normal and subnormal values, the floating point logic circuitry being configured to detect the exceptional values as being exceptional values by reading only said subset of exponent bits.

A15. The processor of any of statements A1 to A14, wherein: the unnormalized narrower floating point format is an unnormalized first floating point format, the normalized narrower floating point format is a normalized first floating point format, the unnormalized wider floating point format is an unnormalized second floating point format, and the normalized wider floating point format is a normalized second floating point format, wherein the normalization circuitry is further configured to re-encode each of a plurality of values from an unnormalized third floating point format to a normalized third floating point format, the unnormalized third floating point format being yet wider than the unnormalized second floating point format and the normalized third floating point format being yet wider than the normalized second floating point format; each of the normalized format registers is at least as wide as the normalized third floating point format, each thus able to hold, at different times, a value in the normalized third floating point format, a NaN-boxed value in the normalized second floating point format, and a NaN-boxed value in the normalized first floating point format; the narrower-format sign injection operation is a first-format sign injection operation, the wider-format sign injection operation is a second-format sign injection operation, and the floating point logic circuitry is further operable to perform a third-format sign injection operation, wherein the floating point logic circuitry is configured so as, when performing the third-format sign injection operation on a NaN-boxed value of the first floating point format in a respective source register of the normalized-format registers, to perform the bit manipulation on a bit at a most-significant bit-position of the normalized third floating point format, and when performing the third-format sign injection operation on a NaN-boxed value of the second floating point format in a respective source register of the normalized-format registers, to also perform the bit manipulation on a bit at a most-significant bit-position of the normalized third floating point format; and the denormalization circuitry is configured so as, when de-normalizing the NaN-boxed value of the normalized first floating point format from the respective source register, to ignore the bit at the most-significant bit-position of the third floating point format and the bit at the most-significant bit-position of the second floating point format when detecting NaN-boxing, and thus denormalize the NaN-boxed value of the normalized first floating point format into the unnormalized first floating point format, and the denormalization circuitry is further configured so as, when de-normalizing the NaN-boxed value of the normalized second floating point format from the respective source register, to ignore the bit at the most-significant bit-position of the third floating point format when detecting NaN-boxing, and thus denormalize the NaN-boxed value of the normalized second floating point format into the unnormalized second floating point format.

A16. A method of operating a processor, the method comprising: re-encoding each of a plurality of values from an unnormalized wider floating point format to a normalized wider floating point format, and re-encoding each of a plurality of values from an unnormalized narrower floating point format to a normalized narrower floating point format, wherein the processor comprises normalized-format registers each being at least as wide as the normalized wider floating point format, each thus able to hold a value in the normalized wider floating point format and, at another time, a NaN-boxed value in the normalized narrower floating point format; performing floating point operations on values held in specified ones of the normalized-format floating point registers, wherein the floating point operations include a wider-format sign injection operation and a narrower-format sign injection operation, wherein, at least when performing the wider-format sign injection operation on a NaN-boxed value of the normalized narrower floating point format held in a respective source register of the normalized-format registers, the operation comprises performing a bit manipulation on a bit in the respective source register at a most-significant bit-position of the normalized wider floating point format; and de-normalizing values from the normalized-format registers, including, at least when de-normalizing the NaN-boxed value of the normalized narrower floating point format from the respective source register, ignoring the bit at the most-significant bit-position of the normalized wider floating point format when detecting NaN-boxing, and thus denormalizing the NaN-boxed value into the unnormalized narrower floating point format. In embodiments the method may further comprise operations corresponding to the features of any of statements A2 to A15.

A17. A processor configured to perform the method of statement A16.

A18. A method of manufacturing, using an integrated circuit manufacturing system, a processor as in any of statements A1 to A15.

A19. A method of manufacturing, using an integrated circuit manufacturing system, a processor as in any of statements A1 to A15, the method comprising: processing, using a layout processing system, a computer readable description of the processor so as to generate a circuit layout description of an integrated circuit embodying the processor; and manufacturing, using an integrated circuit generation system, the processor according to the circuit layout description.

A20. Computer readable code configured to cause the method of statement A16 to be performed when the code is run.

A21. A computer readable storage medium having encoded thereon the computer readable code of statement A20.

A22. An integrated circuit definition dataset that, when processed in an integrated circuit manufacturing system, configures the integrated circuit manufacturing system to manufacture a processor as in any of statements A1 to A15.

A23. A computer readable storage medium having stored thereon a computer readable description of processor as in any of statements A1 to A15 that, when processed in an integrated circuit manufacturing system, causes the integrated circuit manufacturing system to manufacture an integrated circuit embodying the processor.

A24. A computer readable storage medium having stored thereon a computer readable description of a processor as claimed in any of statements A1 to A15 which, when processed in an integrated circuit manufacturing system, causes the integrated circuit manufacturing system to: process, using a layout processing system, the computer readable description of the processor so as to generate a circuit layout description of an integrated circuit embodying the processor; and manufacture, using an integrated circuit generation system, the graphics processing system according to the circuit layout description.

A25. An integrated circuit manufacturing system configured to manufacture a processor as in any of statements A1 to A15.

A26. An integrated circuit manufacturing system comprising: a non-transitory computer readable storage medium having stored thereon a computer readable description of a processor as in any of statements A1 to A15; a layout processing system configured to process the computer readable description so as to generate a circuit layout description of an integrated circuit embodying the processor; andan integrated circuit generation system configured to manufacture the processor according to the circuit layout description.

According to a second aspect disclosed herein there may be provided a processor, method, program, data set or system in accordance with any of the following statements.

B1. A processor comprising: logic circuitry operable to re-encode values from an unnormalized wider floating point format to a normalized wider floating point format, and re-encode values from an unnormalized narrower floating point format to a normalized narrower floating point format, and to decode values in the normalized wider floating point format back to the unnormalized floating point format, and decode values in the normalized narrower floating point format back to the unnormalized narrower floating point format; and normalized-format registers each at least as wide as the normalized wider floating point format, each thus able to hold a value in the normalized wider floating point format and, at another time, a NaN-boxed value in the normalized narrower floating point format; wherein the logic circuitry is operable to perform floating point operations on values held in specified source registers among the normalized-format floating point registers; wherein the floating point operations include a wider-format sign injection operation for performing a bit manipulation function on a sign bit of a value in the normalized wider floating point format, and a narrower-format sign injection operation for performing the bit manipulation function on a sign bit of a value in the normalized narrower floating point format; and wherein the logic circuitry is configured so as when performing the narrower-format sign injection operation on a respective source that is a value in the normalized wider floating point format, to: denormalize the respective source value to a denormalized value in the unnormalized wider floating point format, then perform the bit manipulation function on a bit of the denormalized value in the normalized wider floating point format at a bit position of a sign bit of the unnormalized narrower floating format, then renormalize the denormalized value back to the normalized wider floating point format.

B2. The processor of statement B1, wherein the logic circuitry is configured to detect when the narrower-format sign injection operation is being performed on a value in the normalized wider floating point format that has been normalized from a subnormal, and in response to:

- perform the denormalization of the respective source value, the narrower-format sign injection operation, and the renormalization of the respective source value, in a fused manner by determining a renormalized exponent field exp" and a renormalized mantissa field mant" according to:

$$exp''$$

$$= \begin{cases} exp' & \text{if } |exp' - bias' + (bias - 1)| < (mw - i) \\ -(bias - 1) - (mw - i) + bias' & \text{if } |exp' - bias' + (bias - 1)| > (mw - i) \wedge s = 1 \\ 0 & \text{if } |exp' - bias' + (bias - 1)| = (mw - i) \wedge s = 0 \wedge \text{lzc}(mant') \geq i \\ -(bias - 1) - (mw - i) - \text{lzc}(mant') + bias' & \text{if } |exp' - bias' + (bias - 1)| = (mw - i) \wedge s = 0 \wedge \text{lzc}(mant') < i \\ exp' & \text{otherwise} \end{cases}$$

and

$$mant''$$
$$= \begin{cases} mant'[mw-1:i]\,op(1 \cdot 2^{|exp'-bias|}), mant'[i-1:0] & \text{if } |exp'-bias'+(bias-1)| < (mw-i) \\ mant' \cdot 2^{exp'-bias'+(bias-1)+(mw-i)} & \text{if } |exp'-bias'+(bias-1)| > (mw-i) \wedge s = 1 \\ 0 & \text{if } |exp'-bias'+(bias-1)| = (mw-i) \wedge s = 0 \wedge \mathsf{lzc}(mant') \geq i \\ mant' \cdot 2^{-1-\mathsf{lzc}(mant')} & \text{if } |exp'-bias'+(bias-1)| = (mw-i) \wedge s = 0 \wedge \mathsf{lzc}(mant') < i \\ mant' & \text{otherwise} \end{cases}$$

where *exp'* is an exponent field of the value in the normalized wider floating point format, *mant'* is a mantissa field of the value in the normalized wider floating point format, *bias'* is an optional bias of the normalized wider floating point format, *bias* is an optional bias of the unnormalized wider floating point format, s is a sign to be injected by the bit manipulation function, *lzc* is a leading zero count, and mw is a mantissa width of the mantissa field in the normalized wider floating point format.

B3. The processor of statement B1 or B2, wherein the logic circuitry is further configured so as when performing the wider-format sign injection operation on respective source value that is a NaN-boxed value of the normalized narrower floating point format, to: denormalize the respective source value into a denormalized NaN-boxed value in the unnormalized narrower floating point format, then perform the bit manipulation function on a bit of the denormalized NaN-boxed value at a bit position of a sign bit of the unnormalized wider floating format, then renormalize the denormalized NaN-boxed value back to the normalized narrower floating point format.

B4. The processor of statement B3, wherein the logic circuitry is configured to detect when the wider-format sign injection operation is being performed on a NaN-boxed value in the normalized narrower floating point format, and in response to perform the re-normalization by only adding an exponent bit.

B5. The processor of any of statements B1 to B3, wherein the logic circuitry is further configured so as when performing the wider-format sign injection operation on a respective source value that is a positive NaN in the normalized wider floating point format, at least in a scenario where the wider-format sign injection would cause the respective source value to become a NaN-boxed value in the normalized narrower floating point format if the bit manipulation function was performed directly on a bit at a bit-position of a sign bit of the normalized wider floating point format, to instead: denormalize the respective source value into a denormalized NaN in the unnormalized wider floating point format, then perform the bit manipulation function on the denormalized NaN at a bit position of a sign bit of the unnormalized wider floating format, then renormalize the denormalized NaN back to the normalized wider floating point format.

B6. The processor of statement B5, wherein the floating point logic circuitry is configured to detect when the wider-format sign injection operation is being performed on a respective source value that is a NaN in the normalized wider floating point format, and in response, at least when said scenario occurs, to perform the denormalization by only removing an exponent bit.

B7. The processor of any of statements B1 to B6, wherein the logic circuitry is configured so as, universally for any sign injection operation performed on any value in the normalized-format registers, to perform the sign injection operation by denormalizing, then injecting a sign bit and then renormalizing.

B8. The processor of statement B1, wherein: the logic circuitry is configured to detect when performing the wider-format sign injection operation on a NaN-boxed value of the normalized narrower floating point format, and in response to perform the bit manipulation function on a bit at a most-significant bit-position of the normalized wider floating point format; and the logic circuitry is further configured so as, when de-normalizing the NaN-boxed value of the normalized narrower floating point format, to ignore the bit at the most-significant bit-position of the normalized wider floating point format when detecting NaN-boxing, and thus denormalize the NaN-boxed value into the unnormalized narrower floating point format.

B9. The processor of any of statements B1 to B8, wherein the logic circuitry is a floating point unit, FPU.

B10. The processor of any of statements B1 to B9, wherein the logic circuitry is a floating point unit, FPU, and the FPU is configured to perform the wider format sign injection operation in response to executing a single instance of a wider-format sign-injection machine code instruction type, and to perform the narrower format sign injection operation in response to executing a single instance of a narrower-format sign-injection machine code instruction type.

B11. The processor of any of statements B1 to B10, wherein: the logic circuitry is configured to normalize each value when initially placed into one of the normalized-format registers upon being loaded from a memory address or moved from an unnormalized-format register; and the logic circuitry is further configured to deformalize each value from the normalized-format registers when storing to a memory address or moving to an unnormalized-format register.

B12. The processor of any of statements B1 to B11, wherein the unnormalized wider floating point format is an n-bit format and the unnormalized narrower floating point format is an n/2-bit format.

B13. The processor of any of statements B1 to B12, wherein: the unnormalized narrower floating point format has e_1 exponent bits and the normalized narrower floating point format has e_1+1 exponent bits, and the unnormalized wider floating point format has e_2 exponent bits and the normalized wider floating point format has e_2+1 exponent bits, where e_2 > e_1; and the unnormalized and normalized narrower floating point formats each have m_1 mantissa bits, and the unnormalized and the normalized wider floating point formats each has m_2 mantissa bits, where m_2 > m_1.

B14. The processor of any of statements B1 to B13, wherein each of the normalized wider floating point format and the normalized narrower floating point format comprises an exponent field of a respective number of exponent bits, and:

the circuitry is operable to perform a floating point operation combining normal and subnormal values, the floating point logic circuitry being configured to perform the floating point operation on the normal and subnormal values as re-encoded in the normalized wider floating point format or the normalized narrower floating point format;

wherein the logic circuitry is further able to operate on one or more exceptional values, being configured to operate on each exceptional value represented in the normalized wider floating point format or normalized narrower floating point format; and

wherein each of the normalized wider floating point format and the normalized narrower floating point format employs a subset of the respective number of exponent bits to encode a predetermined indication of being an exceptional value for each exceptional value, the subset being a plurality of bits but fewer bits than the respective number of exponent bits, wherein a combination of bit values used to encode said predetermined indication does not occur within a range of the exponent field used to represent any possible non-exceptional, normal and subnormal values, the floating point logic circuitry being configured to detect the exceptional values as being exceptional values by reading only said subset of exponent bits.

B15. A method of operating a processor, the method comprising: re-encoding values from an unnormalized wider floating point format to a normalized wider floating point format, and re-encoding values from an unnormalized narrower floating point format to a normalized narrower floating point format, and decoding values in the normalized wider floating point format back to the unnormalized floating point format, and decoding values in the normalized narrower floating point format back to the unnormalized narrower floating point format; and performing floating point operations on values held in specified source registers among a set of normalized-format registers, each normalized-format register at least as wide as the normalized wider floating point format, each thus able to hold a value in the normalized wider floating point format and, at another time, a NaN-boxed value in the normalized narrower floating point format; the normalized-format floating point registers; wherein the floating point operations include a wider-format sign injection operation for performing a bit manipulation function on a sign bit of a value in the normalized wider floating point format, and a narrower-format sign injection operation for performing the bit manipulation function on a sign bit of a value in the normalized narrower floating point format; and when performing the narrower-format sign injection operation on a respective source that is a value in the normalized wider floating point format, the method comprises: denormalizing the respective source value to a denormalized value in the unnormalized wider floating point format, then performing the bit manipulation function on a bit of the denormalized value in the normalized wider floating point format at a bit position of a sign bit of the unnormalized narrower floating format, then renormalizing the denormalized value back to the normalized wider floating point format. In embodiments the method may further comprise operations corresponding to the features of any of statements B2 to B14.

B16. A processor configured to perform the method of statement B15.

B17. A method of manufacturing, using an integrated circuit manufacturing system, a processor as in any of statements B1 to B14.

B18. A method of manufacturing, using an integrated circuit manufacturing system, a processor as in any of statements B1 to B14, the method comprising: processing, using a layout processing system, a computer readable description of the processor so as to generate a circuit layout description of an integrated circuit embodying the processor; and manufacturing, using an integrated circuit generation system, the processor according to the circuit layout description.

B19. Computer readable code configured to cause the method of statement B15 to be performed when the code is run.

B20. A computer readable storage medium having encoded thereon the computer readable code of statement B19.

B21. An integrated circuit definition dataset that, when processed in an integrated circuit manufacturing system, configures the integrated circuit manufacturing system to manufacture a processor as in any of statements B1 to B14.

B22. A computer readable storage medium having stored thereon a computer readable description of processor as in any of statements B1 to B14 that, when processed in an integrated circuit manufacturing system, causes the integrated circuit manufacturing system to manufacture an integrated circuit embodying the processor.

B23. A computer readable storage medium having stored thereon a computer readable description of a processor as in any of statements B1 to B14 which, when processed in an integrated circuit manufacturing system, causes the integrated circuit manufacturing system to: process, using a layout processing system, the computer readable description of the processor so as to generate a circuit layout description of an integrated circuit embodying the processor;

and manufacture, using an integrated circuit generation system, the graphics processing system according to the circuit layout description.

B24. An integrated circuit manufacturing system configured to manufacture a processor as in any of statements B1 to B14.

B25. An integrated circuit manufacturing system comprising: a non-transitory computer readable storage medium having stored thereon a computer readable description of a processor as in any of statements B1 to B14; a layout processing system configured to process the computer readable description so as to generate a circuit layout description of an integrated circuit embodying the processor; and an integrated circuit generation system configured to manufacture the processor according to the circuit layout description.

The first aspect may be used together with the second aspect or either may be used separately from the other.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A processor (100) comprising:

    normalization circuitry (124) configured to re-encode each of a plurality of values from an unnormalized wider floating point format to a normalized wider floating point format, and to re-encode each of a plurality of values from an unnormalized narrower floating point format to a normalized narrower floating point format;
    normalized-format registers (114) each at least as wide as the normalized wider floating point format, each thus able to hold a value in the normalized wider floating point format and, at another time, a NaN-boxed value in the normalized narrower floating point format,
    floating point logic circuitry (122) operable to perform floating point operations on values held in specified ones of the normalized-format floating point registers;
    wherein the floating point operations include a wider-format sign injection operation and a narrower-format sign injection operation, the floating point logic circuitry being configured so as, at least when performing the wider-format sign injection operation on a NaN-boxed value of the normalized narrower floating point format held in a respective source register of the normalized-format registers, to perform a bit manipulation on a bit in the respective source register at a most-significant bit-position of the normalized wider floating point format; and
    the processor further comprises denormalization circuitry (126) arranged to de-normalize values from the normalized-format registers, wherein the denormalization circuitry is configured so as, at least when de-normalizing the NaN-boxed value of the normalized narrower floating point format from the respective source register, to ignore the bit at the most-significant bit-position of the normalized wider floating point format when detecting NaN-boxing, and thus denormalize the NaN-boxed value into the unnormalized narrower floating point format.

2. The processor of claim 1, wherein the floating point logic circuitry (122) comprises a floating point unit, FPU, configured to perform the wider format sign injection operation in response to executing a single instance of a wider-format sign-injection machine code instruction type, and to perform the narrower format sign injection operation in response to executing a single instance of a narrower-format sign-injection machine code instruction type.

3. The processor of claim 1 or 2, wherein the denormalization circuitry (126) is configured to perform the denormalization of each value when storing the value to a memory address or moving the value to an unnormalized-format register (112); and optionally wherein the denormalization circuitry (126) is configured to perform each denormalization in response to execution of a single instance of a store or move instruction type.

4. The processor of any preceding claim, wherein the normalization circuitry (124) configured to perform the normalization of each value when loading from a memory address or moving the value from an unnormalized-format register (112); and optionally wherein the normalization circuitry (124) is configured to perform each normalization in response to execution of a single instance of a load or move instruction type.

5. The processor of any preceding claim, wherein the unnormalized wider floating point format is an n-bit format and the unnormalized narrower floating point format is an n/2-bit format.

6. The processor of any preceding claim, wherein the unnormalized narrower floating point format has $e\_1$ exponent bits and the normalized narrower floating point format has $e\_1+1$ exponent bits, and the unnormalized wider floating point format has $e\_2$ exponent bits and the normalized wider floating point format has $e\_2+1$ exponent bits, where $e\_2 > e\_1$.

7. The processor of any preceding claim, wherein the unnormalized and normalized narrower floating point formats each have $m\_1$ mantissa bits, and the unnormalized and the normalized wider floating point formats each has $m\_2$ mantissa bits, where $m\_2 > m\_1$.

8. The processor of any preceding claim, wherein the floating point logic circuitry (122) is configured so as if performing an arithmetic operation on the NaN-boxed value in the respective source register after the wider-format sign injection operation has been performed thereon, to output a result of NaN.

9. The processor of any preceding claim, wherein the floating point logic circuitry (122) comprises detection logic configured to detect a sign injection scenario, wherein the sign injection scenario can be at least either of:

   - the wider-format sign injection operation being performed on the NaN-boxed value of the normalized narrower floating point format as in claim 1, or
   - the narrower-format sign injection operation being performed on a source value held in a respective source register of the normalized-format requested in the normalized wider floating point format;

   wherein the floating point logic circuitry is configured so as, when the detection logic detects the latter scenario, to perform the narrower-format sign injection operation by de-normalizing the source value to the unnormalized narrower floating point format, then performing the bit manipulation on a sign bit of the source value in the unnormalized narrower floating point format, then re-normalizing the source value back to the normalized narrower floating point format.

10. The processor of any preceding claim, wherein:

    the normalization circuitry (124) is configured to receive a plurality of input values and identify each as being either one of the values in the unnormalized wider floating point format or one of the values in the unnormalized narrower floating point format, and perform the re-encoding accordingly, wherein the identification of each input value is based on a determination as to whether the input value is NaN-boxed; and
    the normalization circuitry is configured to ignore a most significant bit of each value input when performing said determination of whether NaN-boxed.

11. The processor of any preceding claim, wherein:

    the floating point logic circuitry (122) is further configured so as when performing the wider-format sign injection operation on a respective source value that is a positive NaN in the normalized wider floating point format, to perform the bit manipulation on a bit in the respective source register at the most-significant bit-position of the normalized wider floating point format; and
    the denormalization circuitry (126) is configured so as, when de-normalizing the positive NaN of the normalized wider floating point format from the respective source register, at least in a scenario where the wider-format sign injection would otherwise cause the respective source value to become a NaN-boxed value in the normalized narrower floating point format, to ignore the bit at the most-significant bit-position of the normalized wider floating point format when detecting NaN-boxing, and thus denormalize the respective source value as if a NaN-boxed value in the normalized narrower floating point format.

12. The processor of any preceding claim, wherein each of the normalized wider floating point format and the normalized narrower floating point format comprises an exponent field of a respective number of exponent bits, and:

the floating point logic circuitry (122) is operable to perform a floating point operation combining normal and subnormal values, the floating point logic circuitry being configured to perform the floating point operation on the normal and subnormal values as re-encoded in the normalized wider floating point format or the normalized narrower floating point format;

wherein the floating point logic circuitry is further able to operate on one or more exceptional values, being configured to operate on each exceptional value represented in the normalized wider floating point format or normalized narrower floating point format; and

wherein each of the normalized wider floating point format and the normalized narrower floating point format employs a subset of the respective number of exponent bits to encode a predetermined indication of being an exceptional value for each exceptional value, the subset being a plurality of bits but fewer bits than the respective number of exponent bits, wherein a combination of bit values used to encode said predetermined indication does not occur within a range of the exponent field used to represent any possible non-exceptional, normal and subnormal values, the floating point logic circuitry being configured to detect the exceptional values as being exceptional values by reading only said subset of exponent bits.

13. The processor of any preceding claim, wherein:

the unnormalized narrower floating point format is an unnormalized first floating point format, the normalized narrower floating point format is a normalized first floating point format, the unnormalized wider floating point format is an unnormalized second floating point format, and the normalized wider floating point format is a normalized second floating point format, wherein the normalization circuitry (124) is further configured to re-encode each of a plurality of values from an unnormalized third floating point format to a normalized third floating point format, the unnormalized third floating point format being yet wider than the unnormalized second floating point format and the normalized third floating point format being yet wider than the normalized second floating point format;

each of the normalized format registers (114) is at least as wide as the normalized third floating point format, each thus able to hold, at different times, a value in the normalized third floating point format, a NaN-boxed value in the normalized second floating point format, and a NaN-boxed value in the normalized first floating point format;

the narrower-format sign injection operation is a first-format sign injection operation, the wider-format sign injection operation is a second-format sign injection operation, and the floating point logic circuitry (122) is further operable to perform a third-format sign injection operation, wherein the floating point logic circuitry is configured so as, when performing the third-format sign injection operation on a NaN-boxed value of the first floating point format in a respective source register of the normalized-format registers, to perform the bit manipulation on a bit at a most-significant bit-position of the normalized third floating point format, and when performing the third-format sign injection operation on a NaN-boxed value of the second floating point format in a respective source register of the normalized-format registers, to also perform the bit manipulation on a bit at a most-significant bit-position of the normalized third floating point format; and

the denormalization circuitry (126) is configured so as, when de-normalizing the NaN-boxed value of the normalized first floating point format from the respective source register, to ignore the bit at the most-significant bit-position of the third floating point format and the bit at the most-significant bit-position of the second floating point format when detecting NaN-boxing, and thus denormalize the NaN-boxed value of the normalized first floating point format into the unnormalized first floating point format, and the denormalization circuitry is further configured so as, when de-normalizing the NaN-boxed value of the normalized second floating point format from the respective source register, to ignore the bit at the most-significant bit-position of the third floating point format when detecting NaN-boxing, and thus denormalize the NaN-boxed value of the normalized second floating point format into the unnormalized second floating point format.

14. A method of operating a processor, the method comprising:

re-encoding each of a plurality of values from an unnormalized wider floating point format to a normalized wider floating point format, and re-encoding each of a plurality of values from an unnormalized narrower floating point format to a normalized narrower floating point format, wherein the processor comprises normalized-format registers each being at least as wide as the normalized wider floating point format, each thus able to hold a value in the normalized wider floating point format and, at another time, a NaN-boxed value in the normalized narrower floating point format;

performing floating point operations on values held in specified ones of the normalized-format floating point registers, wherein the floating point operations include a wider-format sign injection operation and a narrower-format sign injection operation, wherein, at least when performing the wider-format sign injection operation on a NaN-boxed value of the normalized narrower floating point format held in a respective source register of the normalized-format registers, the operation comprises performing a bit manipulation on a bit in the respective source register at a most-significant bit-position of the normalized wider floating point format; and

de-normalizing values from the normalized-format registers, including, at least when de-normalizing the NaN-boxed value of the normalized narrower floating point format from the respective source register, ignoring the bit at the most-significant bit-position of the normalized wider floating point format when detecting NaN-boxing, and thus denormalizing the NaN-boxed value into the unnormalized narrower floating point format.

15. A method of manufacturing, using an integrated circuit manufacturing system, a processor as claimed in any of claims 1 to 13, the method comprising:

processing, using a layout processing system, a computer readable description of the processor so as to generate a circuit layout description of an integrated circuit embodying the processor; and

manufacturing, using an integrated circuit generation system, the processor according to the circuit layout description.

**FIGURE 1**

1 bit      *e* bits      *m* bits

$$sign \; . \; exp \; . \; mant$$

**FIGURE 2**

1 bit      e+1 bits      m bits

$$sign \; . \; exp' \; . \; mant'$$

**FIGURE 3**

1 bit      e+1 bits      m bits

$$sign \; . \; exp' \; . \; mant'$$

First subset (301)    Further portion (302)

**FIGURE 3A**

902

904

914

CPU

910

GPU

Display 916

Speakers 918

920

Camera 922

906 Memory

912

NNA

908

**FIGURE 4**

1004

1002

1006

IC definition dataset → Layout processing → Circuit layout definition → Integrated circuit generation → Integrated circuit

**FIGURE 5**

# EUROPEAN SEARCH REPORT

**Application Number**

EP 25 19 2996

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/186111 A1 (QUINNELL ERIC C [US]) 2 July 2015 (2015-07-02) * the whole document * ----- | 1-15 | INV. G06F9/30 G06F7/38 G06F7/74 |
| A | US 5 768 169 A (SHARANGPANI HARSHVARDHAN [US]) 16 June 1998 (1998-06-16) * the whole document * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 8 January 2026 | Gratia, Romain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 2996

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2026

| Patent document cited in search report | Publication date | Patent family member(s) | Publication date |
|---|---|---|---|
| US 2015186111    A1 | 02-07-2015 | CN    104750456 A | 01-07-2015 |
|  |  | JP    6407001 B2 | 17-10-2018 |
|  |  | JP    2015127954 A | 09-07-2015 |
|  |  | KR    20150079389 A | 08-07-2015 |
|  |  | TW    201528130 A | 16-07-2015 |
|  |  | US    2015186111 A1 | 02-07-2015 |
| US 5768169    A | 16-06-1998 | NONE | |

For more details about this annex : see Official Journal of the European Patent Office, No. 12/82

**EP 4 697 163 A1**

**REFERENCES CITED IN THE DESCRIPTION**

**Patent documents cited in the description**

- GB 2411707 A